# EUROPEAN PATENT SPECIFICATION

(11) **EP 3 856 076 B1**
(45) Date of publication and mention of the grant of the patent: **27.08.2025**
(21) Application number: 19866406.2
(22) Date of filing: 27.09.2019
(51) Int. Cl.: A61C 13/20, A61C 13/007, A61C 5/77, A61C 13/00

(54) **METHOD FOR MANUFACTURING DENTAL RESTORATIONS**
VERFAHREN ZUR HERSTELLUNG VON ZAHNERSÄTZEN
PROCÉDÉ DE FABRICATION DE RESTAURATIONS DENTAIRES

(30) Priority: 28.09.2018 US 201862738704 P
(43) Date of publication of application: 04.08.2021
(73) Proprietor: Perfit Dental Solutions Inc., Kelowna, British Columbia V1V 2L9 (CA)
(72) Inventor: COWBURN, George Houston, Kelowna, British Columbia V1V 2L9 (CA); COWBURN, Steven Harrison, Kelowna, British Columbia V1V 2L9 (CA); GODFREY, Benjamin Luke, Kelowna, British Columbia V1V 2L9 (CA)
(74) Representative: AWA Denmark A/S
(86) International application number: PCT/CA2019/051392
(87) International publication number: WO 2020/061713

(56) References cited:
- WO-A1-2009/073498
- CN-A- 103 598 938
- JP-A- H0 780 005
- US-A1- 2009 133 241
- US-A1- 2014 087 327
- US-A1- 2014 087 327
- US-A1- 2014 272 787
- US-B2- 8 641 938

## Description

### FIELD

The present disclosure relates to manufacture of a dental restoration.

### BACKGROUND

Milling machines are commonly used in preparing dental restorations by milling standardized blocks of material called stock. Stocks are available in several standardized shapes and sizes.

One standard shape for stock is a cylinder or disc format, such as the common 98mm diameter and 10mm tall stock. Dental milling machines secure the stock in place by anchoring to the stock in various fashions. Individual stocks may be enlarged to provide cylinder thicknesses greater than 10mm. Additional stock, possibly of a smaller diameter, such as about 95mm in diameter, may be split in half and centered on the top and the bottom of the original 98mm cylindrical stock. This approach method facilitates extending the original 10mm to up to 40mm. Heights in excess of 40mm are highly uncommon in the manufacturing of dental restorations. Most dental milling machines using this standard generally tolerate a maximum stock height of about 30mm.

The cylindrical stocks are often made of a single, uniform material. When manufacturing dental implant bridges and bars, titanium or zirconia are common options. Once the stock is milled, the bridge or bar is removed from the remainder of the stock and a dental lab technician completes the manufacturing of the restoration by hand. Existing automatic systems in some labs are limited prepare crowns and bridges made from a single material without staining. Removal of support structures and final polishing of the restoration has recently been automated in at scale. Most dental labs use a 5-axis dental machine, such a VHF S1 or the Imes Icore 350i, either of which can mill artificial dentition from a variety of starting materials, including metal or zirconium. In the case of Zirconium oxide, the dentition may be milled out of green state zirconium oxide in the milling machine, then a technician cuts the dentition out and removes the support structures. Then the technician paints additional materials onto the surface. These additional materials alter the color or appearance of the crown after it is crystalized in a furnace. With a metal base, a technician mills a thimble shape as the base of the crown, then layers of porcelain are sequentially baked using a furnace. The final crown is then polished or glazed.

Some stocks include layers of materials other than the primary material from which the stock is made, such as embedded fiber reinforcements. When stock is manufactured, one fiber mat may be layered onto another with a binding resin between them. Subsequent layers of fiber and resin may be added until the desired thickness is achieved, then the resin is cured, providing a stock of resin with encapsulated fiber mats stacked in layers.

Layering of two differently colored materials on top of each other may facilitate achieving a better aesthetic result in the resulting restoration. Some stock on the market combines layers of pink colors for gums and while colors for teeth in two halves to approximate the junction between the teeth and the gums. Inconsistencies are usually fixed by hand by a dental lab technician after milling. US2014272787 discloses a method for fabricating an arch-shaped device for coupling to a patient's mouth; where the method can include disposing each of a plurality of teeth into respective teeth receptors of an inlay device, positioning the inlay device in a recess of a lower portion of a mold device, and coupling the lower portion to an upper portion of the mold device to sandwich the inlay device therebetween, furthermore the method can also include injecting a base compound into an injection hole of the mold device, and processing the base compound to integrate the base compound with the plurality of teeth.

### SUMMARY

The invention relates to a method of manufacturing a dental restoration according to claim 1. The dependent claims provide further features of the invention. Dentures, appliances and other restorations are often manufactured using milling and pouring flowable material into moulds for setting, which carries benefits in terms of dimensional accuracy and functionality. Other approaches include injection moulding, which carries benefits in terms of material strength. The methods and apparatus described herein supports manufacturing dental appliances, prosthetics or other restorations with both subtractive manufacturing and injection moulding by maintaining orientation of a blank, a mould, a compound stock or any suitable stock that is being subjected to injection moulding followed by precision subtractive manufacturing, including through multiple rounds of injection moulding and subtractive manufacturing.

Generally, artificial dentition is prepared from different material than surrounding portions of a restoration that are intended to resemble gums or other tissue. Artificial dentition may be prepared from layered ceramic or other material designed to provide an appearance similar to natural dentition. Some previous approaches have combined subtractive manufacturing to create a void in a stock to provide a mould, then pouring setting material into the mould to provide a compound stock prepared from the poured material and from the material the mould is prepared form. In many cases, the mould includes the dentition and the poured material provides supporting trays the colour of gums for receiving the user's arches. Manufacturing dental restorations with injection moulding typically includes making replicas, investing the replicas into holders or flasks and pouring gypsum materials to encase the replica. The replica is made out of wax or any suitable material that is removed by exposure to heat through hot liquid, convection air, microwave energy or any suitable approach. After injection, this injection assembly is then placed in conditions to cure the dental acrylic, such as exposure to heat, light, microwaves, other radiant energy or other changes in environmental conditions that result in curing and polymerization.

Dental acrylics that are pourable and cured with time or light may not be as robust as their injected, heat-polymerized alternatives. Color stability and other features may also be improved in injected, heat-polymerized materials compared with pourable dental acrylics. As a result, precision milled dentures may lack the structural advantages of being prepared from heat polymerized or other injection moulded material. However, adding material to a machined void under pressure, such as during injection moulding, is difficult to accomplish inside a milling machine.

Based on the difficulty in preparing quality appliances, prosthetics or other dental restorations, particularly from two or more materials, there is a need for improved methods of manufacture. Herein disclosed is a method of, and apparatus for facilitating, manufacture of a multi-material appliance, prosthetic or other restoration, using a combination of subtractive manufacturing and injection moulding. The method includes, and the apparatus facilitates, preserving orientation of a stock during both injection and subtractive manufacturing, and including through multiple cycles of injection and subtractive manufacturing. Standard subtractive manufacturing and injection moulding devices may be applied in the method and use of the system. The method and system provided herein may be applied to any suitable subtractive manufacturing approach, including milling, laser ablation, fluid jet cutting and abrasive flow machining. Milling will be described as a general example of subtractive manufacturing to describe the method and systems, but the method and systems may be applied to any suitable subtractive manufacturing technique.

In the method, milling follows injection, and regardless of the number of cycles of injection and milling, the milling reduces the contours of the restoration to final dimensions after a flowable injection moulding fluid is set to a solid state. During intermediate steps of the method, the stock is milled after it is set or cured (e.g. post-polymerization, post-cool down to solidify, etc.). The orientation of the stock is preserved between milling and injection cycles, maintaining position within the tolerances of the dental milling machine.

In previous injection moulded denture manufacturing, dimensional errors due to a warping of the material during processing are common. Such errors can detrimentally affect the fit and function of the prosthetic, resulting in negative outcomes ranging from pain to loss of teeth and dental implants. Exact dimensional properties can be achieved by milling the stock after injection moulding. The dimensional accuracy of the resulting dental restoration can exceed the dimensional accuracy achieved by setting of the material after injection moulding. The method and apparatus provided herein allow integration of milling with injection moulded by preserving orientation of the stock between injection and milling cycles, and by providing an effective seal for injection cycles. Injection moulding and milling techniques that were difficult to apply in combination previously can be used together, allowing milling of injection moulded materials.

By applying milling after injection moulding during manufacture, the restoration may be measurably more precise than with injection moulding. Error is introduced during polymerization or hardening of the material. Milling after injection moulding facilitates combining the quick manufacture from injection moulding with the precision of milling. Adaptors that fit both injectors and mills allows use of existing equipment for the injection and for the milling. The injection and sealing apparatus provided herein may be manufactured to address space constraints within milling machines. The injection and sealing apparatus includes an injection face that seals against a stock for injecting under pressure into a mould defined in the stock, and may include an injection head with even distribution of injection apertures over a surface area of the stock that the injection and sealing apparatus covers.

The injection and sealing apparatus may be connected with an injection moulding system for injection of flowable material followed by setting the material, and may be positioned relative to the milling machine to be milled, while maintaining orientation and providing positional certainty to the milling machine, either through a direct connection with the milling machine or through being precisely oriented in a holder. The holder may be secured relative to the milling machine with positional certainty, and may either receive injected material while in the milling machine or may be moved between the milling machine and an injection apparatus while maintaining positional certainty of the stock within the holder. The injection apparatus may be an injection moulding apparatus or any other suitable injection apparatus for providing the flowable injection material to the mould. The sealing and injection apparatus may also include heat exchangers for heating and cooling the stock. The design and injection material composition of the injection unit are prescribed by the processing methods of the material manufacturer. Heating elements integrated into the injection plates may be used to achieve and sustain temperatures necessary to maintain flowability or to cure the material. An enveloping housing may be used to contain the heat and vent the unit.

Once the flowable injection material is injected and set, the milling machine may be applied while preserving orientation to mill the stock to desired dimensions. By preserving orientation of the stock throughout injection and milling protocols, positional certainty is provided to the milling machine. Subsequent layers of the same or other flowable injection material may be injected, set and milled in the same manner. The method may facilitate layered manufactured dentition by adding each layer of a complex tooth geometry using injected materials, mitigating the need for premanufactured teeth.

The flowable injection material may be forced into the mould with a pressure injection system, a gravity assisted pour, by being placed between device and material and squeezed, by being 3D Printed in place or any suitable method. An air extraction system for removing pressure from the mould may include air gaps or vents on the device or milled into the object, a vacuum pump line or chamber, or any suitable pressure release.

Polymerizing or solidifying the flowable material may be based on time exposure, or changes in pressure, temperature or other conditions. Time exposure may have several stages with specific conditions and durations. Pressure exposure changes may include a continuous acrylic injection system, pressure created from installing device with material in between and applying air or fluid pressure lines to increase pressure. Changes in temperature, including over a range of between 4 and 100 °C, may be effected by heat exchange fluids circulated through the device, air circulated through device, infrared radiation, electric resistance heating or induction heating. Microwave exposure, UV light exposure based on light emitting diodes with selected wavelengths, or any suitable method, may be applied in a containment chamber integrated with or separate from device.

In a first aspect, herein provided is a method and system for manufacturing dental restorations. A mould is immobilized in a fixed orientation. An injection surface is sealed against the mould. Flowable material is injected into the mould and cured to provide a compound stock. Subtractive manufacturing is applied to the compound stock in the fixed orientation to define precise contours in the stock and provide a dental restoration. The stock may be prepared from a blank with subtractive manufacturing while in the fixed orientation. Additional cycles of injecting, setting and subtractive manufacturing of intermediate stocks and moulds may precede subtractive manufacturing to provide the dental restoration. The stock may be immobilized in the fixed orientation in a holder, and the holder used to transfer the stock between injection and subtractive manufacturing. The stock may include asymmetrical features that facilitate immobilizing the stock in the fixed orientation.

In a further aspect, herein provided is a method of manufacturing a dental restoration comprising: securing an initial mould in an orientation; sealing the initial mould against an injection surface; injecting initial flowable material into the initial mould through the injection surface; setting the initial flowable material, resulting in an initial compound stock secured in the orientation; and applying subtractive manufacturing to the initial compound stock while the initial compound stock is secured in the orientation for providing the dental restoration.

In some embodiments, the initial mould comprises a frame within the initial mould for reinforcing the dental restoration. In some embodiments, the initial mould comprises an orientation specific mould. In some embodiments, the initial mould in the orientation comprises securing the initial mould to a holder, the holder adapted for connecting to both an injection apparatus and to a subtractive manufacturing machine. In some embodiments, securing the initial mould in the orientation comprises matching a profile on the initial mould with a profile on the holder. In some embodiments, securing the initial mould in the orientation comprises securing a blank in the orientation and applying subtractive manufacturing to the blank, resulting in the initial mould. In some embodiments, securing the blank in the orientation comprises securing the blank in a holder. In some embodiments, securing the blank in the orientation comprises connecting the holder to a subtractive manufacturing machine for maintaining the initial mould in the orientation. In some embodiments, injecting the initial flowable material into the initial mould comprises disconnecting the holder from the subtractive manufacturing machine and connecting the holder to an injection apparatus. In some embodiments, securing the blank in the orientation comprises securing the blank in a subtractive manufacturing machine. In some embodiments, injecting the initial flowable material into the initial mould comprises connecting an injection apparatus to the initial mould while the initial mould is secured in the subtractive manufacturing machine.

In some embodiments, securing the initial mould in the orientation comprises securing the initial mould in a holder. In some embodiments, securing the initial mould in the orientation comprises connecting the holder to a subtractive manufacturing machine for maintaining the initial mould in the orientation. In some embodiments, injecting the initial flowable material into the initial mould comprises disconnecting the holder from the subtractive manufacturing machine and connecting the holder to an injection apparatus. In some embodiments, securing the initial mould in the orientation comprises securing the initial mould to a subtractive manufacturing machine. In some embodiments, injecting the initial flowable material into the initial mould comprises connecting an injection apparatus to the initial mould while the initial mould is secured in the subtractive manufacturing machine.

In some embodiments, sealing the initial mould against the injection surface comprises enshrouding the initial mould.

In some embodiments, sealing the initial mould against the injection surface comprises connecting bolts through an injection head and into the initial mould.

In some embodiments, sealing the initial mould against the injection surface comprises applying a bias against the initial mould.

In some embodiments, injecting the initial flowable material into the initial mould comprises injecting the initial flowable material through a plurality of injection apertures regularly spaced from each other over the injection surface. In some embodiments, the initial mould comprises mould apertures defined in the initial mould, the initial mould apertures corresponding to the injection apertures in position for receiving excess initial flowable material from the initial mould.

In some embodiments, setting the initial flowable material comprises changing a temperature of the initial flowable material in the initial mould.

In some embodiments, setting the initial flowable material comprises exposing the initial flowable material to electromagnetic radiation.

In some embodiments, injecting initial flowable material into the initial mould through the injection surface, setting the initial flowable material, and applying subtractive manufacturing the initial compound stock while the initial compound stock is secured in the orientation, are carried out without breaking a seal between the initial mould and the injection surface.

In some embodiments, following injecting initial flowable material into the initial mould through the injection surface, and prior to applying subtractive manufacturing the initial compound stock, a seal between the initial mould and the injection surface is broken.

In some embodiments, applying subtractive manufacturing the initial compound stock while the initial compound stock is secured in the orientation for providing the dental restoration comprises: applying subtractive manufacturing the initial compound stock while the initial compound stock is secured in the orientation, resulting in an intermediate mould; injecting intermediate flowable material into the intermediate mould through the injection surface; setting the intermediate material, resulting in an intermediate compound stock secured in the orientation; and applying subtractive manufacturing to the intermediate compound stock while the intermediate compound stock is secured in the orientation for providing the dental restoration. In some embodiments, the initial flowable material and the intermediate flowable material comprise distinct chemical formulations. In some embodiments, the initial flowable material and the intermediate flowable material comprise the same chemical formulation. In some embodiments, applying subtractive manufacturing to the initial compound stock while the initial compound stock is secured in the orientation for providing the dental restoration comprises executing at least two or more times the steps of applying subtractive manufacturing to the intermediate compound stock, or to a subsequent intermediate compound stock, while the intermediate compound stock or the subsequent intermediate compound stock is secured in the orientation, resulting in a subsequent intermediate mould; injecting subsequent intermediate flowable material into the subsequent intermediate mould through the injection surface; setting the subsequent intermediate material, resulting in the subsequent intermediate compound stock secured in the orientation; and applying subtractive manufacturing to the subsequent intermediate compound stock while the subsequent intermediate compound stock is secured in the orientation. In some embodiments, the intermediate flowable material and the subsequent intermediate flowable material comprise distinct chemical formulations. In some embodiments, the intermediate flowable material and the subsequent intermediate flowable material comprise the same chemical formulation. In some embodiments, a final execution of applying subtractive manufacturing to the subsequent intermediate compound stock while the subsequent intermediate compound stock is secured in the orientation for providing the dental restoration comprises: applying subtractive manufacturing to the subsequent intermediate compound stock while the subsequent intermediate compound stock is secured in the orientation, resulting in a final mould; injecting final flowable material into the final mould through the injection surface; setting the final material, resulting in a final compound stock secured in the orientation; and applying subtractive manufacturing to the final compound stock while the final compound stock is secured in the orientation, resulting in the dental restoration. In some embodiments, the subsequent intermediate flowable material and the final flowable material comprise the same chemical formulation. In some embodiments, the subsequent intermediate flowable material and the final flowable material comprise distinct chemical formulations. In some embodiments, applying subtractive manufacturing to the intermediate compound stock while the intermediate compound stock is secured in the orientation for providing the dental restoration comprises: applying subtractive manufacturing to the intermediate compound stock while the intermediate compound stock is secured in the orientation, resulting in a final mould; injecting final flowable material into the final mould through the injection surface; setting the final material, resulting in a final compound stock secured in the orientation; and applying subtractive manufacturing to the final compound stock while the final compound stock is secured in the orientation, resulting in the dental restoration. In some embodiments, the intermediate flowable material and the final flowable material comprise the same chemical formulation. In some embodiments, the intermediate flowable material and the final flowable material comprise distinct chemical formulations.

In some embodiments, the subtractive manufacturing technique comprises a subtractive manufacturing technique selected from the group consisting of milling, laser ablation, fluid jet cutting and abrasive flow machining.

In a further aspect, not part of the claimed subject matter, there is provided an injection and subtractive manufacturing system for a dental restoration mould comprising: a body; a sealing surface defined on the body for sealing against the mould; an injection inlet defined in the body for receiving a flowable material; an injection flow path defined in the body in fluid communication with the injection inlet for receiving the flowable material; and an injection head in fluid communication with the injection flow path and in fluid communication with the mould for providing the flowable material to the mould.

In some embodiments, the body comprises a heat exchanger for exchanging heat with the body and controlling temperature of the mould.

In some embodiments, the body comprises an insulating portion for masking the injection apparatus from the temperature of flowable material; the injection inlet is defined in the insulation portion; the body comprises a heat exchange portion, the heat exchange portion positioned intermediate the insulating portion and the sealing surface; and the injection flow path provides communication through the insulating portion and the heat exchange portion. In some embodiments, the heat exchange portion comprises a heat exchanger for exchanging heat with the body and controlling temperature of the mould. In some embodiments, the heat exchanger comprises heat exchange flow passages for providing heat exchange fluid to the body and controlling the temperature of the mould.

In some embodiments, the injection inlet is positioned on a lateral portion of the body for facilitating connection to an injection apparatus while the body is secured to the mould in and the mould is secured to a subtractive manufacturing machine.

In some embodiments, the injection head comprises a plurality of apertures spaced across the injection head and corresponding to at least a portion of the surface area of the mould for mitigating bubbles in flowable material when receiving the injection fluid into the mould.

In some embodiments, the system includes a spacer between the injection head and the mould for increasing adding additional material to the mould uniformly across the surface area of the spacer.

In some embodiments, the system includes a holder for maintaining orientation of the mould as between a subtractive manufacturing machine and an injection apparatus.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached figures, in which reference numerals sharing a common final two digits refer to corresponding features across figures (e.g. the injection and sealing apparatus 20, 120, 220, 320, 420, 520, 720, 820, 920, etc.).
Fig. 1 is an exploded view of an orientation and sealing system including a mould;
Fig. 2 is a perspective view of the system of Fig. 1 connected with an injection apparatus;
Fig. 3 is a cross-section elevation view of the system of Fig. 1 connected with the injection apparatus of Fig. 2;
Fig. 4 is an exploded view of the system of Fig. 1 during injection of material into the mould, to provide a stock;
Fig. 5 is an exploded view of the system of Fig. 1 and the stock;
Fig. 6 is a plan view of the system of Fig. 1 and the stock;
Fig. 7 is a perspective view of the stock in the system of Fig. 1 connected with a milling apparatus for providing a restoration;
Fig. 8 is a top-down plan view of a restoration in the system of Fig. 1 after milling the stock;
Fig. 9 is a bottom-up plan view of the restoration in the system of Fig. 1;
Fig. 10 is an exploded view of an orientation and sealing system including a blank;
Fig. 11 is an exploded view of the system of Fig. 10 after milling the blank to provide a mould;
Fig. 12 is a cross-section elevation view of the system of Fig. 11 connected with an injection apparatus;
Fig. 13 is an exploded view of the system of Fig. 11 during injection of material into the mould, to provide a compound stock;
Fig. 14 is an exploded view of the system of Fig. 10 and a compound stock after injection of the material into the mould;
Fig. 15 is an exploded view of an orientation and sealing system including a mould;
Fig. 16 is a perspective view of the system of Fig. 15 connected with an injection apparatus;
Fig. 17 is a cross-section elevation view of the system of Fig. 15 connected with the injection apparatus of Fig. 16;
Fig. 18 is perspective view of a milling machine;
Fig. 19 is a perspective view of the system of Fig. 15 connected with the injection apparatus of Fig. 16 and with the milling machine of Fig. 18;
Fig. 20 is an exploded view of an orientation and sealing system including a mould;
Fig. 21 is an exploded view of an orientation and sealing system including a mould;
Fig. 22 is a cross-section elevation view of a first mould;
Fig. 23 is a cross-section elevation view of a first compound stock resulting from injection of material into the mould of Fig. 22 and setting the material;
Fig. 24 is a cross-section elevation view of a second mould resulting from milling of the first compound stock of Fig. 23;
Fig. 25 is a cross-section elevation view of a second compound stock resulting from injection of material into the second mould of Fig. 24 and setting the material;
Fig. 26 is a cross-section elevation view of a third mould resulting from milling of the second compound stock of Fig. 25;
Fig. 27 is a cross-section elevation view of a third compound stock resulting from injection of material into the third mould of Fig. 26 and setting the material;
Fig. 28 is a cross-section elevation view of a dental restoration prepared by milling the third compound stock of Fig. 27;
Fig. 29 is a cross-section elevation view of a mould;
Fig. 30 is a cross-section elevation view of the mould of Fig. 29 sealed against an injection apparatus;
Fig. 31 is a cross section elevation view of a frame;
Fig. 32 is a cross section elevation view of a stock resulting from injection of material into the frame of Fig. 31 and setting the material;
Fig. 33 is a cross section elevation view of a first mould resulting from milling of the stock of Fig. 32;
Fig. 34 is a cross section elevation view of a first compound stock resulting from injection of material into the first mould of Fig. 33 and setting the material;
Fig. 35 is a cross section elevation view of a second mould resulting from milling of the first compound stock of Fig. 34;
Fig. 36 is a cross section elevation view of a second compound stock resulting from injection of material into the second mould of Fig. 35 and setting the material;
Fig. 37 is a cross section elevation view of a third mould resulting from milling of the second compound stock of Fig. 36;
Fig. 38 is a cross section elevation view of a third compound stock resulting from injection of material into the third mould of Fig. 37 and setting the material;
Fig. 39 is a cross section elevation view of a dental restoration resulting from milling the third compound stock of Fig. 38;
Fig. 40 is a schematic of a method of preparing a dental restoration using an injection and sealing apparatus;
Fig. 41 is a schematic of a method of preparing a dental restoration using an injection and sealing apparatus;
Fig. 42 is a schematic of a method of preparing a dental restoration using an injection and sealing apparatus;
Fig. 43 is a cross section plan view of a blank in a holder;
Fig. 44 is a cross section plan view of the blank of Fig. 43 with material bonded to the holder;
Fig. 45 is a cross section plan view of a blank in a holder; and
Fig. 46 is a cross section plan view of a blank in a holder.

### DETAILED DESCRIPTION

Successful manufacturing of dental appliances, prosthetics or other restorations requires a comfortable fit through a full range of motion, functional artificial dentition, and aesthetically consistent artificial dentition. With these criteria met, any minimization of cost provides additional value to manufacturers, end-users and any intermediate members of the supply chain for dental restorations. Currently, restorations are manufactured using approaches including milling and pouring flowable material into moulds for setting. The method and apparatus described herein may be applied to manufacturing dental appliances, prosthetics or other restorations by maintaining orientation of a blank, a mould, a compound stock or any suitable stock that is being subjected to injection moulding followed by precision subtractive manufacturing.

Standard subtractive manufacturing and injection moulding devices may be applied in the method and use of the system. The methods and systems provided herein may be applied to any suitable subtractive manufacturing approach, including milling, laser ablation, fluid jet cutting and abrasive flow machining. Milling will be described as a general example of subtractive manufacturing to describe the method and systems, but the method and systems may be applied to any suitable subtractive manufacturing technique.

Generally, artificial dentition is prepared from different material than surrounding portions of a restoration that are intended to resemble gums or other tissue. Most teeth have a gradual lightening of the shade of the tooth from the gum towards an apex of the tooth. The tooth may exhibit some translucency at its apex. For this reason, many artificial dentition manufactures offer discs that start with a base shade of pearl, then stack increasingly brighter shades of white/pearl colors in layers that have increasing translucency, to attempt to achieve the same esthetic result. Natural teeth also have subtle elements of lighter and darker sections determined by internal structures of dentin and enamel and the gradual shade increase. To achieve these results in prosthetics, simulations of these shades are applied by hand by a skilled technician using a variety of techniques and materials.

Previous approaches to denture manufacture have combined milling a void into a stock to provide a mould, then pouring setting material into the mould to provide a compound stock prepared from at least two materials. Typically, one of the materials provides the dentition while the other material, or one of the other materials, provides a base to which the dentition is connected, and which is intended to resemble gums or other tissue. The poured material is set, and the resulting stock including two or more materials in order to get an intended aesthetic result. Dental acrylics that are pourable and cured with time or light may not be as robust as their injected, heat-polymerized alternatives. As indicated in Gharechahi, J., Asadzadeh, N., Shahabian, F. and Gharechahi, M. "Flexural Strength of Acrylic Resin Denture Bases Processed by Two Different Methods" (2014) J Dent Res Dent Clin Dent Prospects., 8(3), pp 148-152, "Flexural strength of injection-polymerized acrylic resin specimens was higher than that of the conventional method (P=0.006). This difference was statistically significant (P=0.006)." Color stability and other features may also be improved in injected, heat-polymerized materials compared with pourable dental acrylics. These advantages may be due to a variety of factors including oxidation of amine accelerator in pourable acrylics, less porosity in injected heat polymerized materials, less residual monomer in injected heat polymerized materials, better fidelity of part to mould in injected heat polymerized materials, and other advantages.

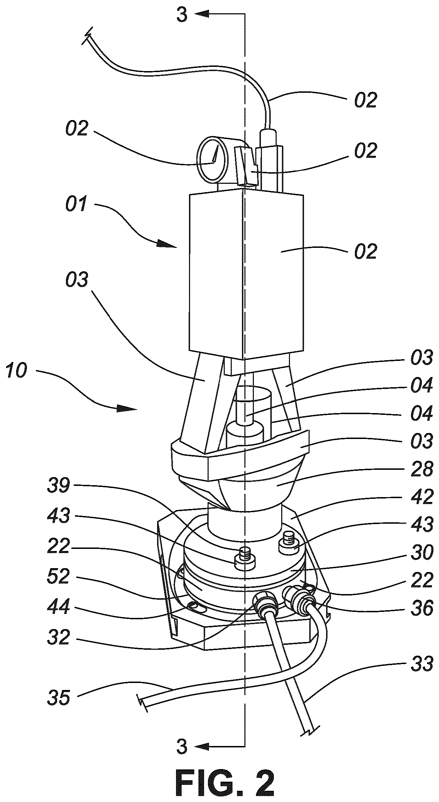

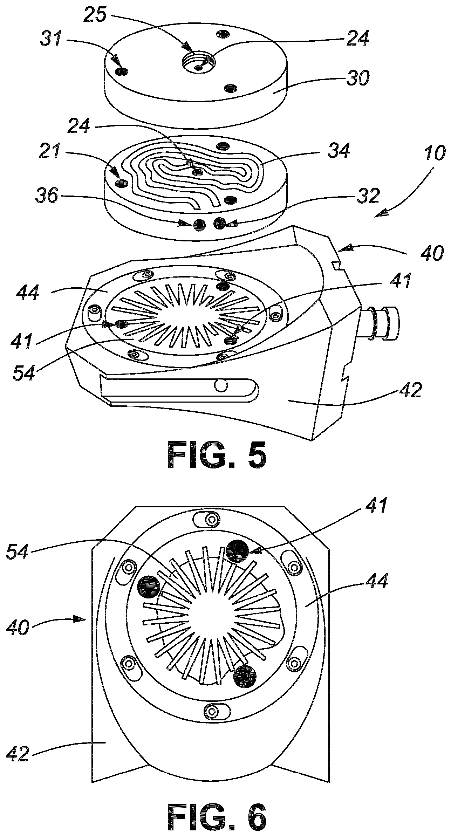

United States Patent No. 8,641,938 to Howe shows material being injected into a void with a syringe until the void is full, as shown in Fig.2A of Howe. The material is then subjected to an environment suitable for polymerizing the material as shown in Fig. 2B of Howe. United States Patent No. 9,492,252 to McDermott and Howe shows material being poured into a milled void and polymerized afterwards, as show in Fig 5 of McDermott and Howe. Compression of the material is shown in Fig. 5 through use of an elastomeric cushion during polymerization.

Adding material to a machined void under pressure, such as during injection moulding, is difficult to accomplish inside a milling machine. Some milling machines apply a holder that secures a stock in a fixed position and that can be removed from the milling machine. In such machines, once a stock is secured into the holder, the orientation of the stock is fixed and known to the milling machine. The holder can be removed and reinstalled without affecting the positional certainty of the stock. Removing a holder from a machine may facilitate additions, alterations or other modification to the stock outside the confines of the milling machine. The holder may also facilitate identification of parts that have been cut out of the stock, which may allow other designs to fit into the remainder of the stock by preserving orientation in the holder between milling sessions and allowing the milling machine to orient against previous milling data. If the stock is removed from the holder or loosened and moved, it is unlikely that the stock can ever be placed back in exactly the same orientation, and errors during milling may result. The holder may be connected to the stock about an outer perimeter or contour, at an upper or lower surface of the stock, or any other suitable anchor point.

Standard manufacture of dental restorations using injection moulding with acrylics involves making replicas and investing them into flasks or other holders using gypsum materials to encase the replica. The replica is made out of wax or any suitable material that is removed by exposure to a heat. A injection channel, often made from the same heat or chemically-labile material, is attached to the replica. After the replica has been removed, a void is left in its shape, providing a mould. Two halves of a mould may be held together with a spring clamp during exposure to high-pressure acrylic injection. After injection, the injection assembly may be placed in thermal communication with a water polymerization bath, a conduction heating element, a convection air oven or a microwave for a period of time at a polymerization temperature to heat-cure the dental acrylic. Cooling follows before the new part can be broken out of its flask and gypsum encasing for use.

Result of a study on dimensional inaccuracy resulting from certain injection systems and polymerization of the acrylic are detailed in Lee, Chung-Jae; Bok, Sung-Bem; Bae, Ji-Young; and Lee, Hae-Hyoung, "Comparative adaptation accuracy of acrylic denture bases evaluated by two different methods", Dental Materials Journal, 2010; 29(4): 411-417. The Lee et al study shows dimensional inaccuracies and structural weakness for acrylic injection and polymerization, although less so than with other polymerization techniques.

Many dental appliances, prosthetics or other restorations have skeletal frameworks underlying teeth and gum structures. These frameworks are manufactured separately prior to manufacture of the appliance. Artificial dentition and gum elements are then manually to the framework added by a dental lab technician for verification, then processed together with the framework as described above.

Based on the difficulty in preparing quality appliances, prosthetics or other dental restorations, particularly from two or more materials, there is a need for improved methods of manufacture. Herein disclosed is a method of, and system for facilitating, manufacture of a multi-material appliance, prosthetic or other restoration, using a combination of a subtractive manufacturing method and injection moulding. The method includes, and the apparatus facilitates, preserving orientation of a mould during both injection and subtractive manufacturing, and including through multiple cycles of injection and subtractive manufacturing. Milling, laser ablation, fluid jet cutting and abrasive flow machining (through liquids, gases or other fluids) are examples of subtractive manufacturing techniques. Milling will be used as an illustrative example in many portions of this specification, and the approaches disclosed that apply milling may also be applied to laser ablation, fluid jet cutting and abrasive flow machining (through liquids, gases or other fluids) are examples of subtractive manufacturing techniques. The methods and systems described herein may be applied to any subtractive manufacturing technique to preserve orientation of a mould between injection and subtractive manufacturing steps. Standard milling and injection moulding devices may be applied in the method and use of the apparatus.

The method includes, and the system facilitates, milling follows injection, and regardless of the number of cycles of injection and milling, the milling reduces the contours of the restoration to final dimensions after a flowable injection moulding fluid is set to a solid state. During intermediate steps of the method, the stock is milled after it is set or cured (e.g. post-polymerization, post-cool down to solidify, etc.). The orientation of the stock is preserved between milling and injection cycles, maintaining position within the tolerances of the dental milling machine.

By applying a subtractive manufacturing technique after injection moulding during manufacture, the restoration may be measurably more precise than with injection moulding alone. Error is introduced during polymerization or hardening of the material. Applying subtractive manufacturing after injection moulding facilitates combining the quick manufacture of injection moulding with the precision of milling, all using existing equipment.

When applying the method and using the system, a stock is secured in or to a milling machine and also to an injection apparatus. The stock may be a standard 98 or 98.5mm disc with 10mm lip, other disc formats with various diameters and thicknesses, cubes, square-blocks, any secured object with an interface capable of making a seal with the injection apparatus, such as a flat surface around at least a portion of its perimeter, for restricting flow of the injected flowable material, or any suitable stock.

The milling machine and the stock may be connected by a securing feature on the milling machine, a securing feature on a holder for the stock, a feature milled or machined into the stock, a premanufactured feature on the stock or any suitable securing feature. The holder may be reversibly connectible with the milling machine and with the injection apparatus for preserving orientation when connected with and removed from each of the milling machine and the injection apparatus. A vacuum, clamp or any suitable external force may be applied to secure and seal an injection head against a flat, curved, or other regular fitted surface of the stock corresponding to the shape of an injection head.

The injection apparatus injects any suitable flowable injection material, including thermoplastic materials, acrylics, dental composites, lithium disilicates, lithium silicates, green-state ceramics (e.g. zirconium oxide, etc.), green-state metals, air, gasses or another medium which can be used to press one material against another. Setting of the flowable injection material may be completed with any combination of time exposure, temperature, pressure, vacuum, gas exposure, UV light exposure, microwave or other energy applications. After injection and setting, the resulting compound stock may be further milled, providing an additional mould into which additional flowable material may be injected to add additional layers to the finalized dental restoration.

Combining injection moulding and milling in one method and system includes practical challenges. Orientation of the stock that is being milled or the mould being injected into must be preserved, which may be accomplished by facilitating injection steps while inside a milling machine, with its close spacing constraints, preserving the stock orientation in a holder, or any suitable method. During injection moulding, air being displaced by the injection moulding fluid must be purged. The environment of the stock must be modified to set the injection moulding fluid, such as by heating or cooling, exposure to light, electromagnetic radiation or other radiative energy, other energy or chemicals, or other suitable approaches to setting the injection moulding fluid inside the stock. A seal must be formed and maintained between the stock and the injection moulding equipment that is capable of holding back the pressure of the injection moulding fluid being injected.

During injection of flowable material into a mould, any air present in the mould will be displaced. Most previous injection moulding of dental restorations apply a gypsum mould, which is porous to air, allowing the flowable injection material medium to push the air into the gypsum. Materials typically used in milling machines are not porous and as a result, an output channel in fluid communication with the injection channels may be milled into the mould to provide an exist path for the air. A vacuum may be connected to the output channel to draw out air while it is being displaced, or vents may be in communication with the output channel to allow the air to be pushed out. The vents may be pre-manufactured or machined into the stock by the milling machine when preparing the mould.

A fluid such as acrylic monomer may be injected prior to the acrylic so the liquid monomer would be displaced by the more viscous injected acrylic. Where fluid monomer is flowing directly on to acrylic from above as more acrylic is added, the monomer may be pushed up and displace the air above it. Monomer is much more fluid than acrylic and may displace smaller cavities of air than acrylic alone. If some monomer is trapped in a cavity, it may dilute into the surrounding acrylic and the region would be unaffected. Removal of bubbles may be facilitated by a vibrating action applied during injection to assist in removing the air, the flowable acrylic monomer or other fluid in the cavity of the mould and in the channel. Removal of bubbles may be facilitated by using a less viscous precursor, which will retain bubbles less effectively than a more viscous precursor.

Environment and other operating conditions are prescribed by the manufacturers of flowable injection material to inject and set the material. In some jurisdictions, regulations require dental lab technicians to be knowledgeable in processing techniques and to consistently apply such techniques when using the materials.

In one example, when applying the injected dental acrylic Ivocap, premixed amounts of monomer and polymer are combined and prepared in a syringe for injection. An air piston pushes the acrylic into a void at approximately 6 bar (87psi) of pressure at room temperature for 5 minutes. The material is then subjected to a temperature of around 100 °C for 35 minutes in a large water bath. Cool down may be completed with cold tap water for 10 minutes under continuous injection, then 20 additional minutes with the injection apparatus removed. During the heating and cooling cycles the acrylic polymerizes and shrinks slightly. To compensate for this shrinkage, the air piston continuously injects more acrylic into the cavity of the mould. Different methods use convection air to heat and cool the material, with similar procedure and timing on the steps.

There are many other plastic-based dental materials that may be injected (e.g. polyether ether ketone (PEEK), polyetherketoneketone (PEKK), Poly(methyl methacrylate) (PMMA), acetal resin, etc.). Materials such as lithium silicates and disilicates need to be injected at temperatures above 900 °C. To use these high-melting point materials, the mould must be pre-heated to a prescribed temperature, then the heated fluid material injected and maintained under high pressure until it cools and sets. These materials may provide suitable base materials for preparing artificial dentition.

In previous injection moulded denture manufacturing, dimensional errors due to a warping of the material during processing are common. Such errors can detrimentally affect the fit and function of the prosthetic, resulting in negative outcomes ranging from pain to loss of teeth and dental implants. Exact dimensional properties may be achieved by milling the stock after injection moulding. The dimensional accuracy of the resulting dental restoration may exceed the dimensional accuracy achieved by setting of the material after injection moulding. The method and apparatus provided herein allow integration of milling with injection moulded by preserving orientation of the stock between injection and milling cycles, and by providing an effective seal for injection cycles. The seal may be maintained continuously through injection moulding and milling. Injection moulding and milling, techniques that were difficult to apply in combination previously, may be used together, allowing milling of injection moulded materials.

The apparatus provided herein may be manufactured to address space constraints within milling machines. Traditional milling machines have access only on one side with a door and five walls surrounding a milling chamber. The apparatus may be designed as described herein fit into the space restrictions of the milling machine while maintaining a strong seal with the stock. Many of the materials used in injection moulding of dental restorations have their own, usually large, processing machines. These machines are incongruent with standard dental milling machines, and dental technicians typically manually work with parts made from both machines. Any single workpiece prepared from the stock is typically too large to fit into a flask or other working envelopes of the water baths, convection heat ovens, UV light ovens, microwave ovens or other processing machines. The processing machines set, cure or otherwise convert a flowable material to a set material. Milling machines do not typically include a curing step, but many 3D printers do. Most stock milling machines capable of making a denture will not fit into a dental flask. Processing machines are built to house purpose-built flasks securely, and a custom-built larger flask would not be compatible with a purpose-built receptacle. A stock that may fit into traditional flasks is sometimes called 'bridge blocks', intended for the creation of dental bridges of two to five teeth. Nearly all available materials of bridge blocks are incompatible with injection moulding as they require exposure to high temperatures which would incinerate all dental acrylics and thermoplastics.

To expose the injection moulding materials to the conditions found in previous injection moulding systems, a shroud or sealed environment must both accommodate the specific environmental requirements of injection and setting of the injection moulded material, and do so in a form factor sufficiently small to fit inside or on a milling machine. Depending on the environment required, a housing or other containment unit may be applied to envelop the unit, further control the environment and not damage the milling machine.

A containment unit may be used to encapsulate the orientation and sealing system. The containment unit may as a chamber to focus heat, airflow, gases or other fluids, vacuum, microwave or other changes in conditions that may facilitate injection, curing or milling. The containment unit may include a faraday cage could be used around the stock and the injected acrylic to allow exposure to microwaves while the apparatus remains in the milling machine. The containment unit may contain some or all of the injection system which fixes onto the stock. The containment unit would also have to fit within the confines of the milling machine. The containment unit could be used to contain vapours or fumes for safe redirection and expulsion. A heat insulative chamber may mitigate damage to the milling machine resulting from high heat. An airtight and pressure-secure chamber may create and maintain any pressure from vacuum to high pressures, and allow control of exposure to specific gases at selected pressures.

The orientation and sealing system includes an injection and sealing apparatus. The injection and sealing apparatus is connected with a blank, a mould or other stock prepared from one or more materials. The stock is immobilized in a holder or by connection directly to a milling machine. Where a holder is used, the holder may be connected with either the milling machine, or have the injection and sealing apparatus attached for injection moulding, while maintaining orientation and providing positional certainty to the milling machine. The injection and sealing apparatus may be connected with an injection moulding system for injection of flowable material followed by setting the material, or may be milled by the milling machine, while maintaining orientation and providing positional certainty to the milling machine.

The injection and sealing apparatus includes an injection plate. The injection plate is connected with the stock and secured to the stock with sufficient pressure to establish a seal between the injection plate and the stock. The injection plate may be secured to the stock by bolts extending through holes in the stock tightened with nuts. Many alternative approaches to securing the stock to the holder may be applied alone or in combination, including a hole that does not extend all the way though the stock used in conjunction with an expanding bolt, a securing mechanism built into the holder or the milling machine itself, the stock may be machined to fit within the holder at an extremely tight tolerance such that the stock does not rotate relative to the holder, the holder may include walls that are biased inwards.

The injection plate has two sides. The side that faces the stock may include a splayed injection head for evenly distributing flowable injection fluid across the surface area of the stock. The opposing side, facing away from the stock, includes an aperture for engaging with an injection device and receiving an injection of the flowable injection fluid. The aperture is in fluid communication with an injection channel that feeds into the injection head. The splayed or otherwise distributed injection channels of the injection head allow the flowable injection fluid to access the stock across a selected area of the stock.

The injection plate may also include a snaking heat exchange path through a body of the injection plate. The heat exchange path extends across a sufficient area of the injection plate to facilitate heat exchange with the stock. The heat exchange path is fed by a heat exchange input and facilitates flow with a heat exchange output, each of which may be defined in a side of the injection plate. When the bolts that secure the injection plate to the stock are tightened, a seal with the stock is created.

Lines are attached to the heat exchange input and the heat exchange output of the injection plate. The injection plate may be prepared from thermally conductive material to allow heat transfer from the heat exchange flow path to the stock. Controlling flow and temperature of water, glycol, air or other fluids flowing into the heat exchange input, through the heat exchange flow path and out of the heat exchange output allows precise regulation of temperature at the stock to create required environments to process acrylic.

An insulation plate may be connected with the injection plate to insulate an injection apparatus connected with the injection and sealing apparatus from temperature changes at the injection plate. The insulation plate, the injection plate and the stock may have aligned holes into which the bolts or other securing features are inserted to secure the insulation plate and the injection plate to the stock. A gasket may be included between the insulation plate and the injection plate.

A connection point for an injection apparatus is connected with the injection plate. The connection point allows the injection apparatus to be securely connected the injection plate and in fluid communication with the injection head. The connection point may extend through the insulation plate if an insulation plate is used. The connection point may also hold a cartridge of the flowable injection material for directing flowable injection material through the injection head and into the mould. Where the insulation plate is used, it directs heat into the stock and ensures that heat produced by hot water circulation through the heat exchange line does not heat and cure the flowable injection material in the cartridge.

The injection apparatus may use an air piston fed by an airline (e.g. the Ivocap injection system fed with an airline regulated to 6 bar, etc.). The air piston may be secured to the connection point. The shape of the connection point allows the air piston's locking mechanism to fully engage and lock as it does with the purpose-built flasks.

The flowable injection material is injected into the mould. Depending on the flowable injection material, the mould may be pre-heated. Air displaced by the injection material may either be vented through designed vents or a vacuum pump used to purge the air from the injection head and mould.

The injection chamber is either the filling of a negative void in the object, or an extension of the height of the object, or both. Extension rings between the injection plate and the object allow additional material to be added to the outside of the object increasing the original proportions of the part.

Once the flowable injection material is injected into the mould, additional steps are often required. In the case of heat polymerized acrylic, the temperatures is increased to about 100 °C using the heat exchanger flow line and maintained for a period of time to harden the acrylic. Water is fed by gravity or pumped through the heat exchanger flow line. Afterwards the unit must be cooled down so cold water through the unit to allow for next steps to occur. Glycol or other fluids may also be used as a heat exchange medium instead of water. A heating element or induction unit integrated into the injection plate may also be used for temperature control.

The injection and sealing apparatus may be removed after draining the water line feeding the heat exchange flow line, removing pressure to the air piston, and disconnecting the nuts and bolts or other securing mechanism holding the injection and sealing apparatus on the stock. The injection plate may be prepared from metal or another material that does not bond to the injected acrylic and that can be disconnected from the stock easily. Where flowable injection material that bonds metal is used, a silicone or Teflon lining may reduce adherence. The installation and removal of the injection and sealing apparatus could also be automated and integrated as part of a milling machine.

Once the flowable injection material is injected and set, the milling machine may be applied while preserving orientation to mill the stock to desired dimensions. Preserving orientation of the stock through injection and milling protocols facilitates positional providing certainty to the milling machine. Subsequent layers of the same or other flowable injection materials may be injected, set and milled in the same manner. The method may facilitate layered manufactured dentition by adding each layer of a complex tooth geometry using injected materials, mitigating the need for premanufactured dentition.

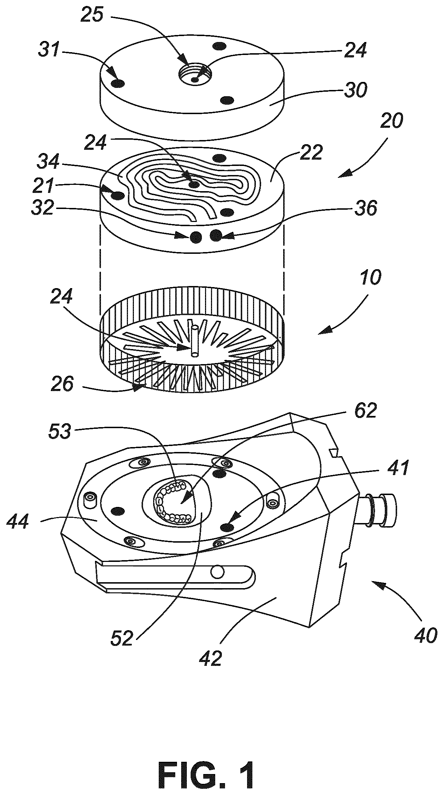

Fig. 1 shows an exploded view of an orientation and sealing system 10. The system 10 includes an injection and sealing apparatus 20 and a holder 40.

The injection and sealing apparatus 20 includes an injection plate 22 connected with an insulation plate 30. The insulation plate 30 includes an injection connection point 25. An injection flow path 24 is also defined in the insulation plate 30 and is in fluid communication with the injection connection point 25. The injection flow path 24 is also defined in the injection plate 22, and may have portions that are external to the injection plate 22. The injection plate 22 includes a flared injection head 26 in communication with the injection flow path 24. A heat exchange input 32 is in communication with a heat exchange flow path 34. The heat exchange flow path 34 is shown as a tortuous path through the injection plate 22, but any suitable form of heat exchange flow path may be applied for heat exchange within the injection plate 22. The flared head 26 may help minimize air bubbles or other irregularities in flow for highly viscous materials.

The holder 40 includes a holder body 42 with an anchor collar 44, although any suitable immobilization and orientation mechanism may be applied. A mould 52 is secured in the holder 40 by the anchor collar 44. The mould 52 includes dentition 53 and a cavity 62. The mould 52 may be connected to the injection and sealing apparatus 20 through insulation plate apertures 31 in the injection plate 30, injection plate apertures 21 in the injection plate 22 and stock apertures 41 in the mould 52.

Fig. 2 shows an injection apparatus 01 connected with the system 10. The injection apparatus 01 includes a drive system 02 that powers injection of flowable injection material 70 from a reservoir 60 though an injection system 04. The drive system 02 includes a compressed air inlet and piston. The injection apparatus 01 is connected with the system 10 by connection of a clamp 03 to an anchor point 28 connected with the insulation plate 30. The injection and sealing apparatus 20 is connected with the mould 52 in a fixed orientation by three bolts 39 that extend through insulation plate apertures 31, injection plate apertures 21 and stock apertures 41. The bolts 39 are connected with the injection and sealing apparatus 20 by nuts 43, forming a seal between the injection plate 22 and the mould 52. An inflow line 33 is connected with the heat exchange input 32 and an outflow line 35 is connected with the heat exchange output 36. The mould may be connected with the injection and sealing apparatus and the holder by any suitable connection, including mated elements, holes of any suitable number, geometry, depth or angle. The stock apertures 41 may be through the entirety of the mould 52 or only a portion of the mould 52.

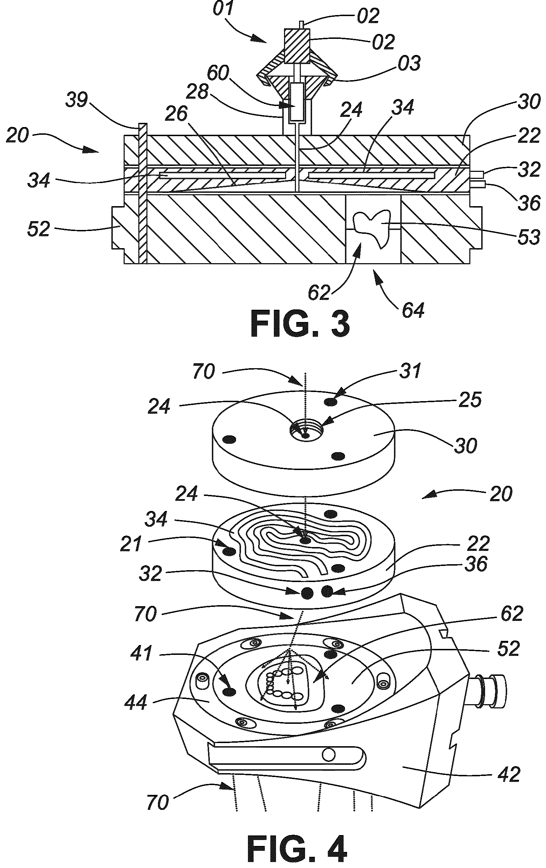

Fig. 3 shows a cross-section of the injection and sealing apparatus 20 connected with the mould 52 and with the injection apparatus 01. The insulation plate 30 is prepared from thermally insulative material for protecting the flowable injection material 70 located in the anchor point 28 from changing temperature when hot or cold fluid flows through the heat exchange flow path 34. The cavity is in fluid communication with a channel 64 for allowing flowable injection material 70 (Fig. 4) to flow out of the cavity 62 under pressure after the cavity 62 is filled with the flowable injection material 70.

Fig. 4 shows an exploded view of the system 10 during injection of the flowable injection material 70. When the flowable injection material 70 is injected into the cavity 62 of the mould 52, the injection head 26 spreads the flowable injection material 70 across the mould 52 to fill the cavity 62 evenly, minimizing bubbles and irregularities. The flowable injection material 70 exits the mould 52 similarly dispersed across a surface area.

Figs. 5 and 6 show an exploded view of the system 10 and a plan view of the holder 40, after injection. A compound stock 54 that includes at least two types of injection material is results from after injection of the flowable injection material 70 into the mould 52 and setting the flowable material 70. The compound stock 54 includes at least the materials from which the dentition 53 is made and the set flowable injection material 70 that at least some of the remainder of the compound stock 54 is made from. The flowable injection material 70 may for example be material coloured to resemble gingiva and from which dental trays will be manufactured. The dental trays may be the material in which the dentition 53 is anchored.

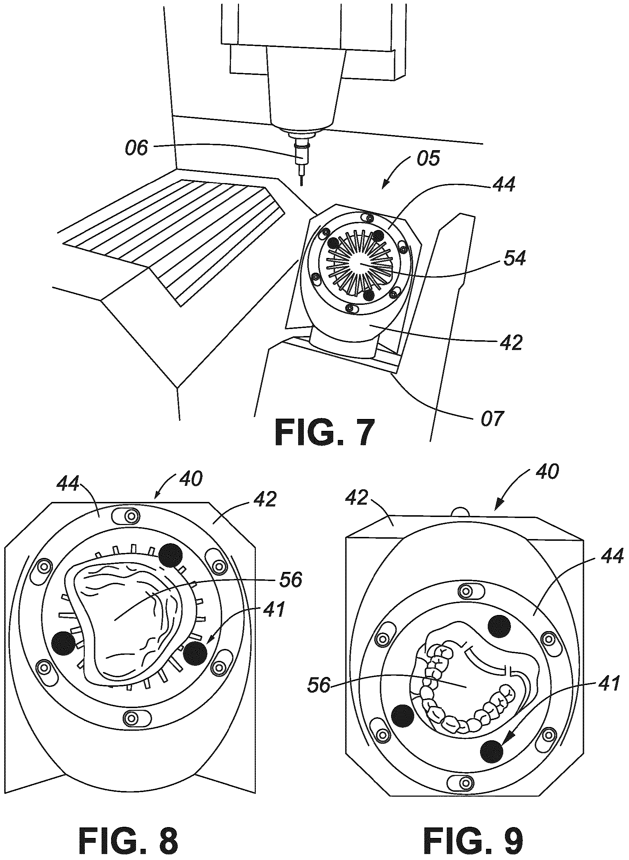

Fig. 7 shows a milling machine 05 including a mill 06 and a milling base plate 07. The holder 40 is connected with the milling base plate 07, maintaining orientation of the compound stock 54 relative to the mill 06 and providing positional certainty.

Figs. 8 and 9 show a restoration 56 resulting from milling of the compound stock 54 with the mill 06.

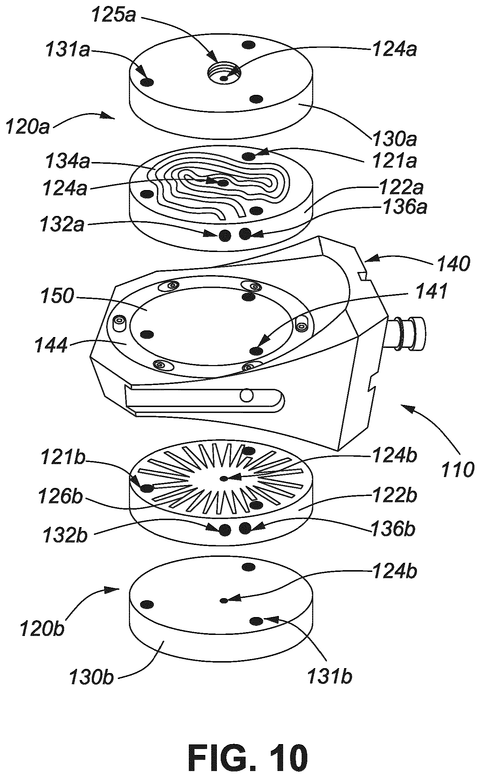

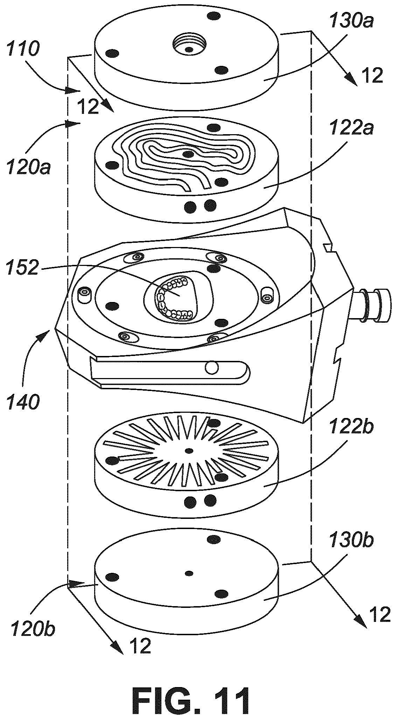

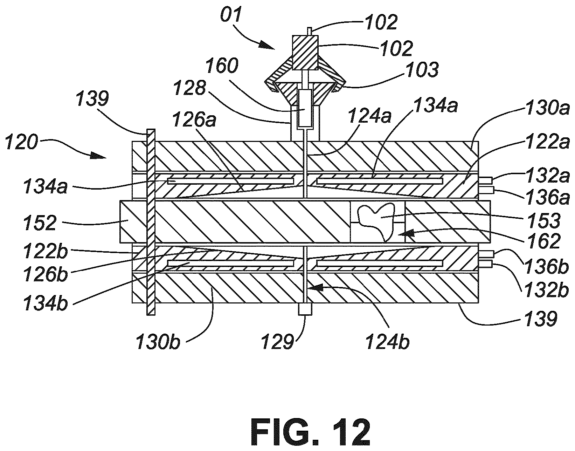

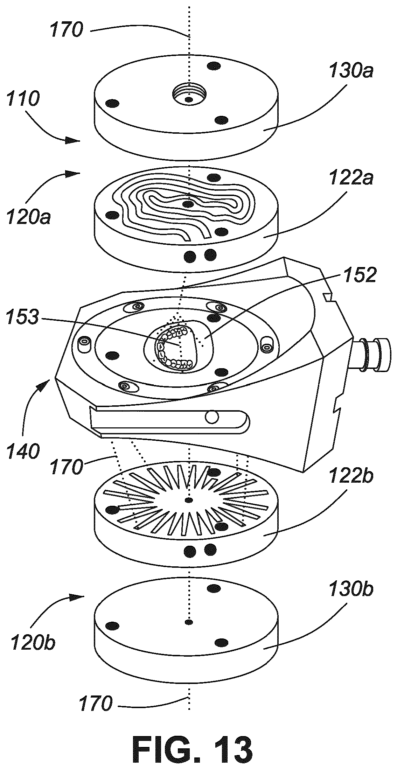

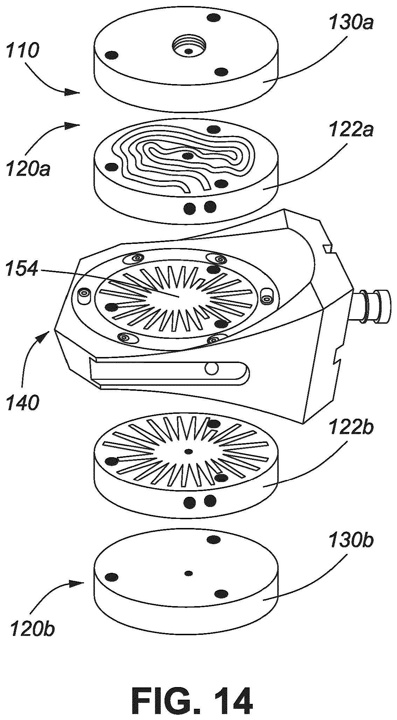

Figs. 10 to 14 show an orientation and sealing system 110. The orientation and sealing system 110 as shown in Fig. 10 includes a blank 150 in the holder 140. The blank 140 must be milled to provide the mould 152 shown ins Fig. 11 and 12. Injection of the flowable injection material 170 from the reservoir 160 is shown in Fig. 13, and the system 110 after setting of the compound stock 154 is shown in Fig. 14.

The orientation and sealing system 110 includes a first injection and sealing apparatus 120a and a second injection and sealing apparatus 120b. The first injection and sealing apparatus 120a provides the functionality of the injection and sealing apparatus 20 of the system 10. The second injection and sealing apparatus 120b receives the flowable injection material 170 from the mould 152, providing pressure relief and establishing fluid communication through the second injection flow path 124b to a vent 129 connected with the second insulating plate 130b. The vent 129 may be a vent, or may be under vacuum to draw air and the flowable injection material 170 through the second injection plate 122b.

Fig. 10 shows an exploded view of the orientation and sealing system 110. The system 110 includes the first injection and sealing apparatus 120a, the second injection and sealing apparatus 120b and the holder 140.

The first injection and sealing apparatus 120a includes the first injection plate 122a connected with the first insulation plate 130a. The first insulation plate 130a includes the first injection connection point 125a. The first injection flow path 124a is defined in the first insulation plate 130a and is in fluid communication with the first injection connection point 125a. The first injection flow path 124a is also defined in the first injection plate 122a, and may have portions that are external to the first injection plate 122a. The first injection plate 122a includes the first flared injection head 126a in communication with the first injection flow path 124a for providing the flowable injection material 170 over an even dispersion of the surface area of the first injection plate 122a and the mould 152. The first heat exchange input 132a is in communication with the first heat exchange flow path 134a. The first heat exchange flow path 134a is shown as a tortuous path through the first injection plate 122a, but any suitable form of heat exchange flow path may be applied for heat exchange within the first injection plate 122a.

The holder 140 includes the holder body 142 with the anchor collar 144, although any suitable immobilization and orientation mechanism may be applied. The mould 152 is secured in the holder 140 by the anchor collar 144. The mould 152 includes dentition 153 and the cavity 162. The mould 152 may be connected to the first injection and sealing apparatus 120a through insulation plate apertures 131a in the first insulation plate 130a, the first injection plate apertures 121a in the first injection plate 122a and the stock apertures 141 in the mould 152. The mould 152 may be connected to the second injection and sealing apparatus 120b through the second insulation plate apertures 131b in the second insulation plate 130b, the second injection plate apertures 121b in the second injection plate 122b.

The second injection and sealing apparatus 120b includes the second injection plate 122b connected with the second insulation plate 130b. The second insulation plate 130a includes the second injection connection point 125b. The second injection flow path 124b is defined in the second insulation plate 130b and is in fluid communication with the second injection connection point 125b. The second injection flow path 124b is also defined in the second injection plate 122b, and may have portions that are external to the second injection plate 122b. The second injection plate 122b includes the second flared injection head 126b in communication with the second injection flow path 124b for receiving flowable injection material over an even dispersion of the surface area of the second injection plate 122b. The second heat exchange input 132b is in communication with the second heat exchange flow path 134b. The second heat exchange flow path 134b is shown as a tortuous path through the second injection plate 122b, but any suitable form of heat exchange flow path may be applied for heat exchange within the second injection plate 122b.

Figs. 11 shows the mould 152 secured in the holder 140 before injection of the flowable injection material 170 into the mould 152.

Fig. 12 shows the cross-section of the first injection and sealing apparatus 120a connected with the mould 152 and with the injection apparatus 101, and of the second injection and sealing apparatus 120b connected with the mould 152. The first insulation plate 130a is prepared from thermally insulative material for protecting the flowable injection material 170 located in the anchor point 128 from changing temperature when hot or cold fluid flows through the first heat exchange flow path 134a. The cavity is in fluid communication with the channel 164 for allowing flowable injection material 170 (Fig. 4) to flow out of the cavity 162 under pressure after the cavity 162 is filled with the flowable injection material 170. The flowable injection material 170 flows into the second injection plate 122b through the second injection head 126b, and the temperature of the second injection plate 122b may be modulated independent of the temperature of the first injection plate 122a using the second heat exchange flow path 134b. The vent 129 may be a vent, or may be under vacuum to draw air and the flowable injection material 170 through the second injection plate 122b.

Fig. 13 shows the mould 152 secured in the holder 140 during injection of the flowable injection material 170 into the mould 152.

Fig. 14 shows the compound stock 154 in the holder after injection of the flowable injection material 170 into the mould 152 and setting of the flowable injection material 170.

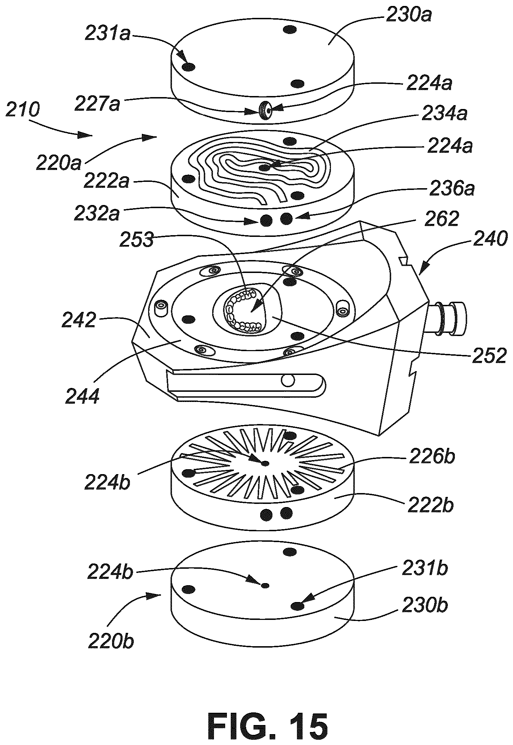

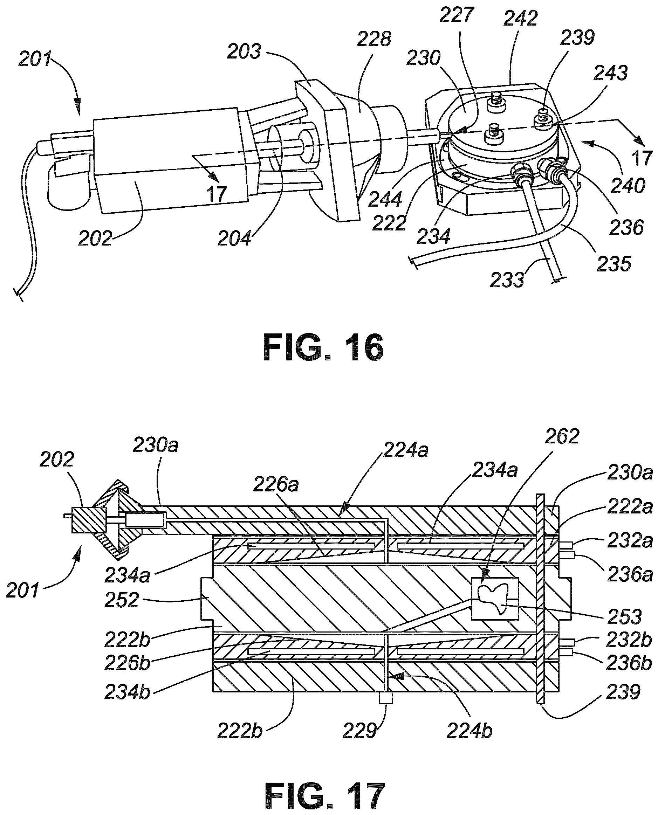

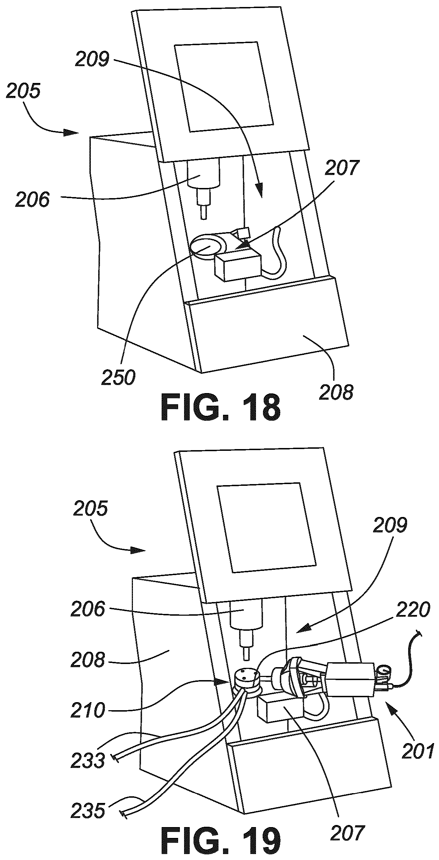

Figs. 15 to 19 show an orientation and sealing system 210 that includes a lateral injection port 227a on the first injection and sealing apparatus 220a. The lateral injection port 227a is located on an outer lateral surface of the first injection and sealing apparatus 220a, and the first injection flow path 224a includes a lateral portion through the first insulation plate 130a. The orientation and sealing system 210 may be used with the holder 240 as shown in Figs. 15 and 16. Alternatively, the injection and sealing apparatus 220 may be used alone and immobilized directly in the milling machine 205 as shown in Figs. 18 and 19.

Fig. 15 shows an exploded view of the orientation and sealing system 210. The system 210 includes the first injection and sealing apparatus 220a, the second injection and sealing apparatus 220b and the holder 240.

The first injection and sealing apparatus 220a includes the first injection plate 222a connected with the first insulation plate 230a. The first insulation plate 230a includes the lateral injection port 227a. The first injection flow path 224a is defined in the first insulation plate 230a and is in fluid communication with the lateral injection port 227a. The first injection flow path 224a is also defined in the first injection plate 222a, and may have portions that are external to the first injection plate 222a. The first injection plate 222a includes the first flared injection head 226a in communication with the first injection flow path 224a for providing the flowable injection material 270 over an even dispersion of the surface area of the first injection plate 222a and the mould 252. The first heat exchange input 232a is in communication with the first heat exchange flow path 234a. The first heat exchange flow path 234a is shown as a tortuous path through the first injection plate 222a, but any suitable form of heat exchange flow path may be applied for heat exchange within the first injection plate 222a.

The holder 240 includes the holder body 242 with the anchor collar 244, although any suitable immobilization and orientation mechanism may be applied. The mould 252 is secured in the holder 240 by the anchor collar 244. The mould 252 includes dentition 253 and the cavity 262. The mould 252 may be connected to the first injection and sealing apparatus 220a through insulation plate apertures 231a in the first insulation plate 230a, the first injection plate apertures 221a in the first injection plate 222a, the stock apertures 241 in the mould 252. The mould 252 may be connected to the second injection and sealing apparatus 220b through the second insulation plate apertures 231b in the second insulation plate 230b, the second injection plate apertures 221b in the second injection plate 222b.

The second injection and sealing apparatus 220b includes the second injection plate 222b connected with the second insulation plate 230b. The second insulation plate 230a includes the injection connection point 225. The second injection flow path 224b is defined in the second insulation plate 230b and is in fluid communication with the injection connection point 225. The second injection flow path 224b is also defined in the second injection plate 222b, and may have portions that are external to the second injection plate 222b. The second injection plate 222b includes the second flared injection head 226b in communication with the second injection flow path 224b for receiving flowable injection material over an even dispersion of the surface area of the second injection plate 222b. The second heat exchange input 232b is in communication with the second heat exchange flow path 234b. The second heat exchange flow path 234b is shown as a tortuous path through the second injection plate 222b, but any suitable form of heat exchange flow path may be applied for heat exchange within the second injection plate 222b.

Fig. 16 shows the injection apparatus 201 connected with the system 210. The injection apparatus 201 includes the drive system 202 that powers injection of flowable injection material 270 though the injection system 204. The drive system 202 includes the compressed air inlet and piston. The injection apparatus 201 is connected with the system 210 by connection of the clamp 203 to the anchor point 228 connected with the insulation plate 230. The injection and sealing apparatus 220 is connected with the mould 252 in the fixed orientation by three bolts 239 that extend through insulation plate apertures 31, injection plate apertures 221 and stock apertures 241. The bolts 239 are connected with the injection and sealing apparatus 220 by nuts 243, forming the seal between the injection plate 222 and the mould 252. The inflow line 233 is connected with the heat exchange input 232 and the outflow line 235 is connected with the heat exchange output 236.

Fig. 17 shows the cross-section of the first injection and sealing apparatus 220a connected with the mould 252 and with the injection apparatus 201, and of the second injection and sealing apparatus 220b connected with the mould 252. The first insulation plate 230a is prepared from thermally insulative material for protecting the flowable injection material 270 located in the anchor point 228 from changing temperature when hot or cold fluid flows through the first heat exchange flow path 234a. The cavity is in fluid communication with the channel 264 for allowing flowable injection material 270 (Fig. 4) to flow out of the cavity 262 under pressure after the cavity 262 is filled with the flowable injection material 270. The flowable injection material 270 flows into the second injection plate 222b through the second injection head 226b, and the temperature of the second injection plate 222b may be modulated independent of the temperature of the first injection plate 222a using the second heat exchange flow path 234b. The vent 229 may be a vent, or may be under vacuum to draw air and the flowable injection material 270 through the second injection plate 222b.

Fig. 18 shows the milling machine 205 including the mill 206 inside a cavity 209 defined within an body 208 of the milling machine 205. The milling base plate 207 may be used as a surface upon which to directly immobilize the mould 252 (or a blank, compound stock or restoration).

Fig. 19 shows the first injection and sealing apparatus 220a immobilized directly in the milling machine 205 on the milling base plate 207. The first injection and sealing apparatus 220a is secured to the milling base plate 207 by any suitable method, likely orientation specific physical connections.

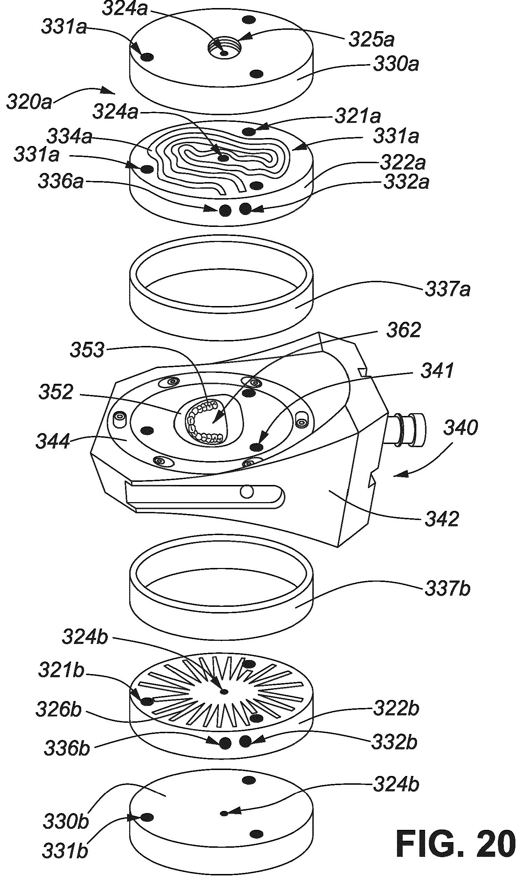

Fig. 20 shows an exploded view of the orientation and sealing system 310. The system 310 includes the first injection and sealing apparatus 320a, the second injection and sealing apparatus 320b and the holder 340. A first spacer 337a is included between the mould 352 and the first injection plate 322a. A second spacer 337b is included between the mould 352 and the second injection plate 322b. The spacers provide room for injection of additional flowable injection material to increase a height of the mould 352.

The first injection and sealing apparatus 320a includes the first injection plate 322a connected with the first insulation plate 330a. The first insulation plate 330a includes the first injection connection point 325a. The first injection flow path 324a is defined in the first insulation plate 330a and is in fluid communication with the first injection connection point 325a. The first injection flow path 324a is also defined in the first injection plate 322a, and may have portions that are external to the first injection plate 322a. The first injection plate 322a includes the first flared injection head 326a in communication with the first injection flow path 324a for providing the flowable injection material 370 over an even dispersion of the surface area of the first injection plate 322a and the mould 352. The first heat exchange input 332a is in communication with the first heat exchange flow path 334a. The first heat exchange flow path 334a is shown as a tortuous path through the first injection plate 322a, but any suitable form of heat exchange flow path may be applied for heat exchange within the first injection plate 322a.

The holder 340 includes the holder body 342 with the anchor collar 344, although any suitable immobilization and orientation mechanism may be applied. The mould 352 is secured in the holder 340 by the anchor collar 344. The mould 352 includes dentition 353 and the cavity 362. The mould 352 may be connected to the first injection and sealing apparatus 320a, separated by the first spacer 337a, through insulation plate apertures 331a in the first insulation plate 330a, the first injection plate apertures 321a in the first injection plate 322a and the stock apertures 341 in the mould 352. The mould 352 may be connected to the second injection and sealing apparatus 320b, separated by the second spacer 337b, through the second insulation plate apertures 331b in the second insulation plate 330b, and the second injection plate apertures 321b in the second injection plate 322b.

The second injection and sealing apparatus 320b includes the second injection plate 322b connected with the second insulation plate 330b. The second insulation plate 330a includes the second injection connection point 325b. The second injection flow path 324b is defined in the second insulation plate 330b and is in fluid communication with the second injection connection point 325b. The second injection flow path 324b is also defined in the second injection plate 322b, and may have portions that are external to the second injection plate 322b. The second injection plate 322b includes the second flared injection head 326b in communication with the second injection flow path 324b for receiving flowable injection material over an even dispersion of the surface area of the second injection plate 322b. The second heat exchange input 332b is in communication with the second heat exchange flow path 334b. The second heat exchange flow path 334b is shown as a tortuous path through the second injection plate 322b, but any suitable form of heat exchange flow path may be applied for heat exchange within the second injection plate 322b.

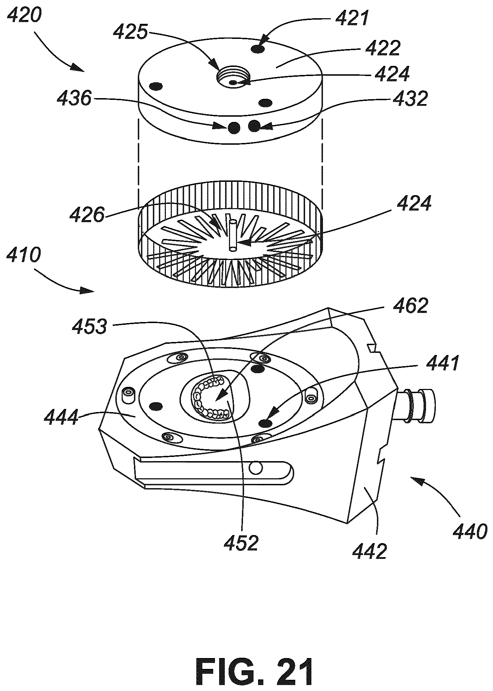

Fig. 21 shows an orientation and sealing system 410 in which the injection and sealing apparatus 420 includes the injection plate 422 and no other plates. The heat exchange flow path between the heat exchange input 432 and the heat exchange output 436 is included inside the injection plate 422. The heath exchange flow path is not shown and may be prepared similar y to the heat exchange flow path 34 of the injection plate 22.

The holder 440 includes a holder body 442 with an anchor collar 444, although any suitable immobilization and orientation mechanism may be applied. A mould 452 is secured in the holder 440 by the anchor collar 444. The mould 452 includes dentition 453 and a cavity 462. The mould 452 may be connected to the injection and sealing apparatus 420 through the injection plate apertures 421 in the injection plate 422 and stock apertures 441 in the mould 452.

The injection plate 422 may be prepared from insulative material at a top portion proximate the injection connection point 425. The injection and sealing system 410 may alternatively be applied in such a manner that no flowable injection material is exposed to changes in temperature resulting from use of the heat exchanger features, such as by maintaining an injection temperature until an injection cycle is completed, then flowing heat exchange fluid of a different temperature into the heat exchange inlet 432 to induce setting of the flowable injection material.

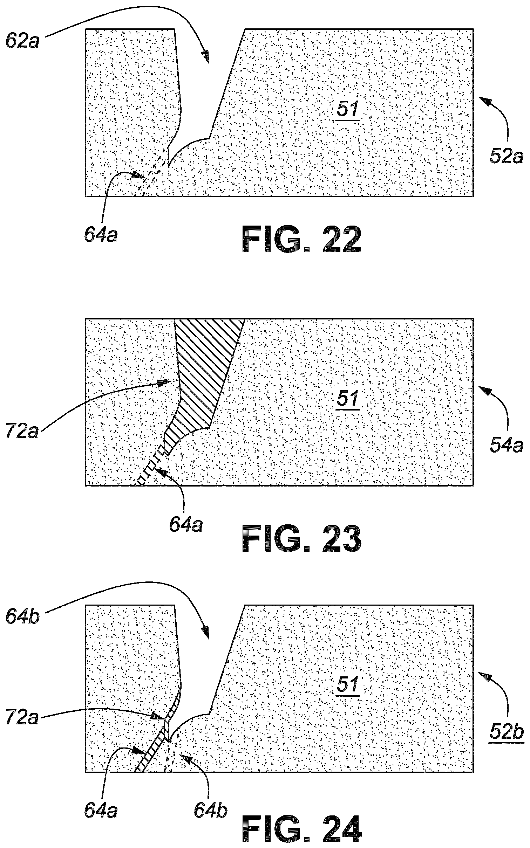

Figs. 22 to 28 show sequential injection, setting and milling of materials to manufacture the dental restoration 56.

In Fig. 22, a first mould 52a prepared from a first material 51 includes a first cavity 62a with a first channel 64a to allow air to escape during injection.

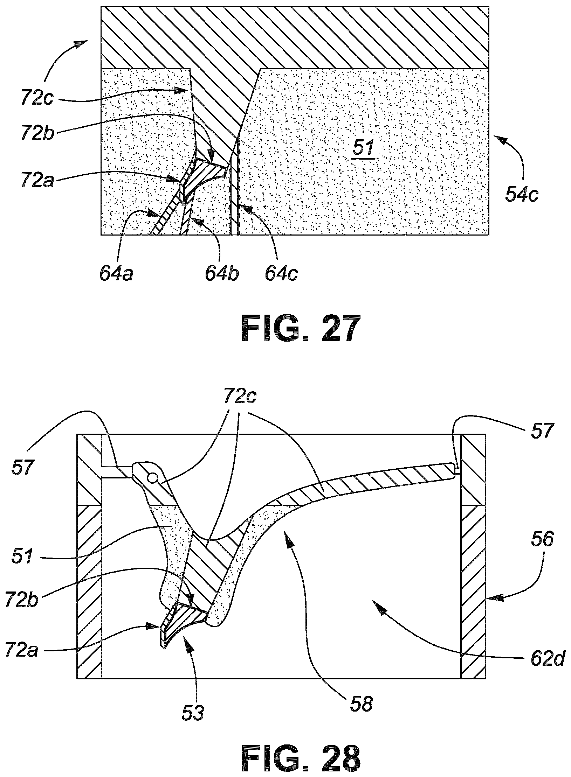

In Fig. 23, a flowable injection material has been injected and filled the first cavity 62a and set into the first set material 72a, providing the first compound stock 54a. The first channel 64a has been filled with the first set material 72a. The first set material 72a may resemble enamel and defines part of the dentition 53 that will be included in the restoration 56 (see Fig. 28).

In Fig. 24, a second mould 52b prepared by milling out the majority of the first set material 72a shown in the first compound stock 54a. The milling defines a second cavity 62b in the second mould 52b with a second channel 64b to allow air to escape during injection. A portion of the first set material 72a remains in the second mould 52b.

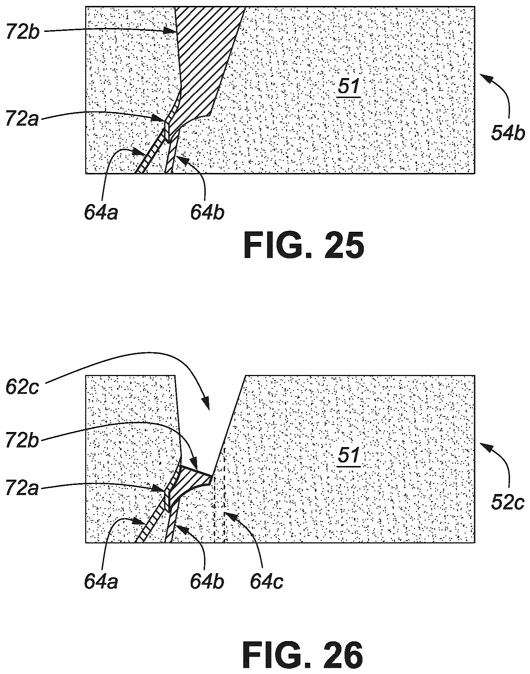

In Fig. 25, a flowable injection material has been injected and filled the second cavity 62b and set into the second set material 72b, providing the second compound stock 54b. The second channel 64b has been filled with the second set material 72b.

In Fig. 26, a third mould 52c prepared by milling out the majority of the second set material 72b shown in the second compound stock 54b. The milling defines a third cavity 62c in the third mould 52c with a third channel 64c to allow air to escape during injection. A portion of the second set material 72b remains in the third mould 52c.

In Fig. 27, a flowable injection material has been injected and filled the third cavity 62b and set into the third set material 72c, providing the third compound stock 54c. The flowable injection material has also been injected above the stop of the third mould 52c, providing a layer of the third set material 72c on top of the third compound stock 54c to increase the height of the third compound stock 54c. The third channel 64b has been filled with the third set material 72c.

In Fig. 28, the third set material 72c and the first material 51 have been milled out to define the restoration 56. The dental restoration 56 is connected to the remaining compound stock 54 through flash 57, which may be easily removed. The restoration 56 includes a maxillary tray 58 prepared from a mixture of the first material 51 and the third set material 72c, including in the portion of the restoration 56 that extends upward above the third mould 52c. The restoration 56 also includes dentition 53 extending from the maxillary tray 58.

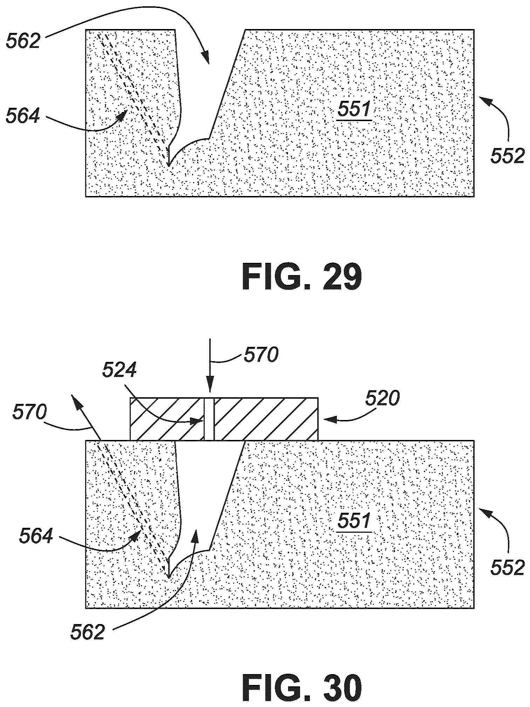

Fig. 29 shows a mould 552 prepared from the first material 551. The cavity 562 is defined in the mould 552 and includes the channel 564 pointing upwards rather then downwards.

Fig. 30 shows the mould 552 in operation with the injection and sealing apparatus 520 sealed against the mould 552 during injection of the flowable injection material 570 through the injection channel 524. Air escaped through the channel 564 and the flowable injection material 570 is pushed out of the channel 564 on the same side of the mould 552 as the sealing and injection apparatus 520 is sealed with the mould 552. Depending on the specific design of a milling machine or injection apparatus, this placement of the channel 564 may facilitate use of the injection and sealing apparatus 520 inside the milling machine.

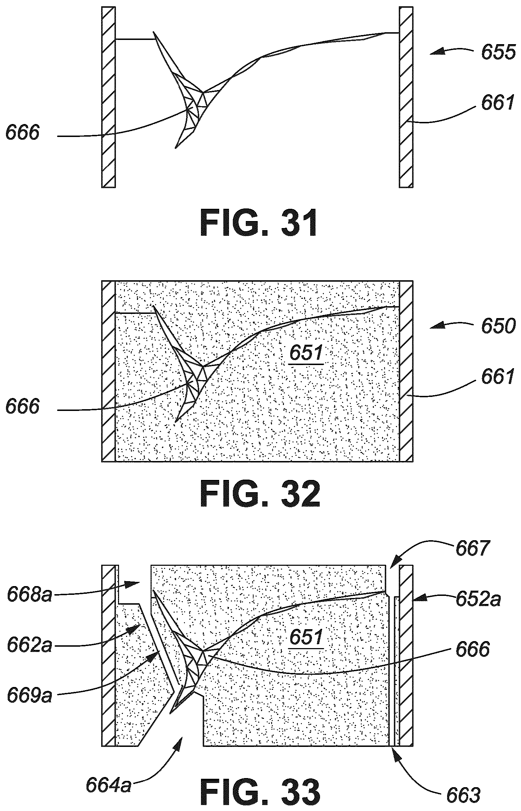

Figs. 31 to 39 show manufacture of a prosthetic 656 including a frame 666 for structural strength. The prosthetic 656 is prepared from the blank 650, which includes the frame 666. The blank 650 is milled, and the resulting first mould 652a is injected moulded to provide the first compound blank 654a. After two additional milling and injection moulding procedures, followed by a final milling procedure, the prosthetic 656 remains and may be removed from the flash 657 for use.

Fig. 31 shows a frame support 655. The frame support 655 includes the frame 666 secured within a housing 661. The frame support 655 may be prepared from the same material as frame 666 or any suitable material.

Fig. 32 shows the blank 650 after filled with the first material 651. The first material 651 may be injection moulded or otherwise set into the frame support 655. The housing 661 provides form to the blank 650 during moulding or setting.

In Fig. 33, a first mould 652a has been prepared by milling the first material 651 out of the blank 650 to define the first cavity 662a. The first cavity 662a is generally divisible into a first input aperture 668a in communication with the first channel 664a through a first communication channel 669a to allow air to escape during injection. A secondary input aperture 667 is included opposite the first input aperture 668a and is in communication with a secondary channel 663. Together the first input aperture 668a and the input aperture 667 sever the connection between the frame 666 and the frame support 655.

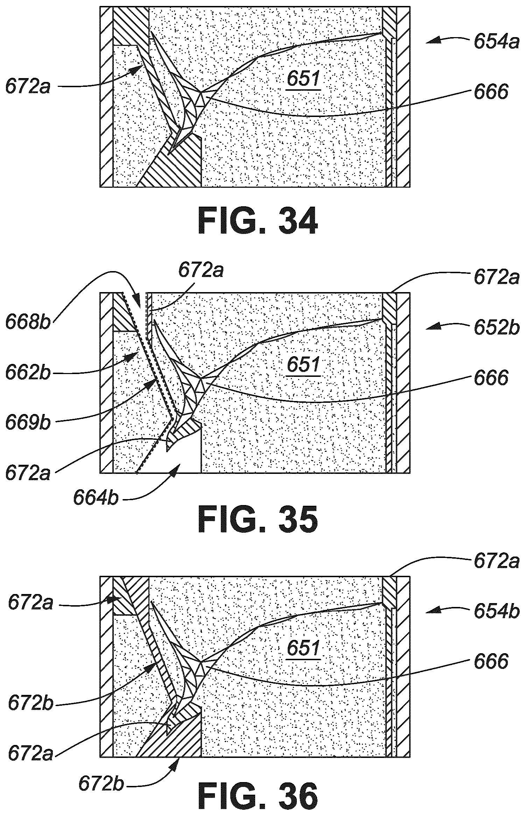

In Fig. 34, a flowable injection material has been injected and filled the first cavity 662a and set into the first set material 672a, providing the first compound stock 654a. The first channel first cavity 662a, including both the first input aperture 668a and the first communication channel 669a, and the first channel 664a has been filled with the first set material 672a. The first set material 72a may resemble enamel and defines part of the dentition 53 that will be included in the restoration 56 (see Fig. 28).

In Fig. 35, a second mould 652b prepared by milling our the majority of the first set material 672a shown in the first compound stock 654a. The milling defines a second cavity 662b in the second mould 652b with a second channel 64b to allow air to escape during injection. The second cavity 662b is divided into a second input aperture 668b in communication with the second channel 664b through a second communication channel 669b to allow air to escape during injection. A portion of the first set material 672a remains in the second mould 652b.

In Fig. 36, a flowable injection material has been injected and filled the second cavity 662b and set into the second set material 672b, providing the second compound stock 654b. The second channel 664b has been filled with the second set material 672b.

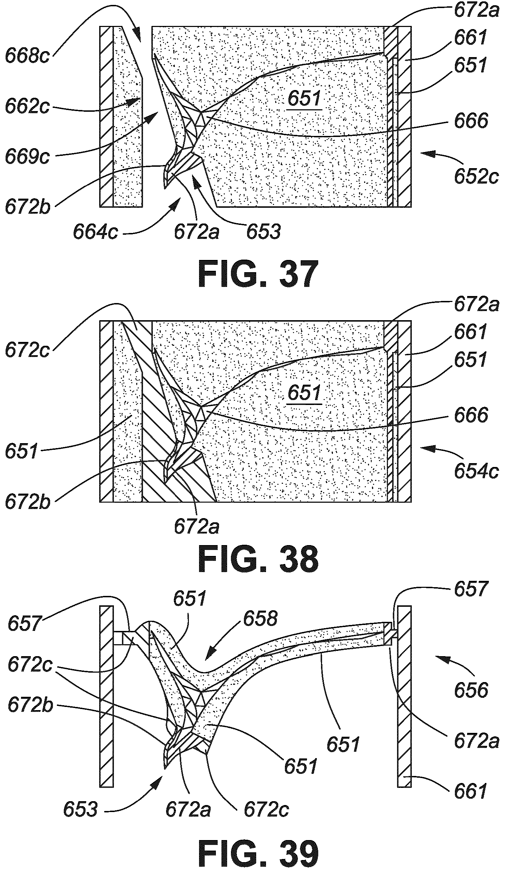

In Fig. 37, a third mould 652c prepared by milling out the majority of the second set material 672b shown in the second compound stock 654b. The milling defines a third cavity 62c in the third mould 52c with a third channel 64c to allow air to escape during injection. The third cavity 662b is divided into a third input aperture 668c in communication with the third channel 664c through a third communication channel 669c to allow air to escape during injection. A portion of the second set material 672b remains in the third mould 652c.

In Fig. 38, a flowable injection material has been injected and filled the third cavity 662c and set into the third set material 672c, providing the third compound stock 654c. The flowable injection material has also been injected above the stop of the third mould 652c, providing a layer of the third set material 672c on top of the third compound stock 654c to increase the height of the third compound stock 654c. The third channel 664c has been filled with the third set material 672c.

In Fig. 39, the third set material 672c and the first material 651 have been milled out to define the restoration 656. The dental restoration 656 is connected to the remaining compound stock 654 through the flash 657, which may be easily removed. The restoration 656 includes a maxillary tray 658 prepared from a mixture of the first material 651 the first set material 672a and the third set material 672c. The restoration 656 also includes dentition 653 extending from the maxillary tray 658. The dentition is prepared from the first set material 672a and the second set material 672b.

In preparing the restoration 656, fluids such as air, nitrogen, water, bonding compounds, etching compounds, dental resins and dental composite could be injected between layers of the set material 672a, 672b and 672c. Injection of bonding compounds may strengthen a bond between subsequent layers of set material 672a, 672b and 672c, which added to the dental restoration 656.

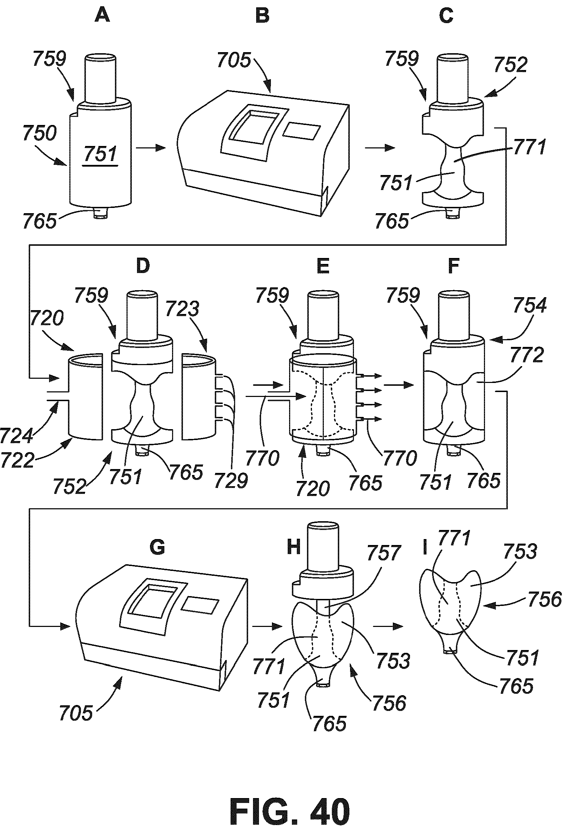

Fig. 40 is a schematic of a method of preparing a dental restoration 756 using an injection and sealing apparatus 720. Fig. 40 includes Figs. 40A to 40I.

Fig. 40A shows the blank 750 prepared from the first material 751 is provided. The blank 750 includes an orientation specific profile 759 for securing the blank 750 in the milling machine 705 in a defined orientation. The blank 750 includes an attachment point 765 that may be connected with a restoration or implanted into an individual's dental arch.

Fig. 40B shows the blank 750 is placed in the milling machine 705 based on the defined orientation, and the milling machine 705 mills the blank 750 into the mould 752.

Fig. 40C shows the mould 752 is shown defining a profile around which the flowable injection material 770 may be injected and may set around an anchor point 771.

Fig. 40D shows the injection and sealing apparatus 720 is shown with the injection plate 722 and a sealing plate 723. Together, the injection plate 722 and the sealing plate 723 encase the mould 752 and seal against the outer surface of the mould 752. The flowable injection material 770 flows into the injection plate 722 through the injection flow path 724. The sealing plate 723 includes a plurality of the vents 729.

Fig. 40E shows the flowable injection material 770 being injected through the injection flow path 724. During injection of the flowable injection material 770, excess flowable injection material 770 and other fluids present in the injection and sealing apparatus out of the vents 729 through application of force into the injection flow path 724, under vacuum or through any suitable method of drawing excess flowable injection material 770 and other fluids out of the vents 729.

Fig. 40F shows the flowable injection material 770 has set around the anchor point 771 into the set material 772, providing the compound stock 754. The compound stock 754 has been removed from the injection and sealing apparatus 720.

Fig. 40G shows the milling machine 705, in which the compound stock 754 is secured with the orientation specific profile 759 maintaining positional certainty with earlier milling at Fig. 40B.

Fig. 40H shows the restoration 756 after the milling machine 705 has milled the set material 772 down to the dentition 753, providing the restoration 756. The dentition 753 is prepared from the set material 772. The dentition 753 is anchored to the attachment point 765 by the anchor point 771 that was machined into the mould 752. The anchor point 771 may be a custom abutment machined into the blank 750 when preparing the mould 752. The restoration 756 is connected to the orientation specific profile through the flash 757. The flash 757 may be cut, broken or otherwise disrupted to remove the restoration 756 from the orientation specific profile 759.

The orientation specific profile 759 allows the mould 752 to be removed from the milling machine 705, connected with the sealing and injection apparatus 720, then after injection and setting of flowable injection material 770, removed from the sealing and injection apparatus 720 for connection with the milling machine while maintaining the orientation during milling. The orientation specific profile 759 may also be connected with the restoration through the attachment point or otherwise in a manner that does not require breaking the flash from the orientation specific profile (not shown).

Fig. 40I shows the restoration 756 after removal of the flash 757 and the orientation specific profile. The restoration 756 includes the dentition 753, which is prepared from the set material 772. The dentition 753 is connected with the anchor point 771, which is prepared from the first material 751. The attachment point 765 allows the restoration 756 to be connected with a broader restoration, such as a denture or bridge. The restoration 756 may also be used as a crown. In some cases, the blank 750, and as a result the anchor point 771 and the attachment point 765, may be prepared from a metal such as titanium and the set material 772 may be a lithium disilicate or other material suitable for preparing the dentition 753.

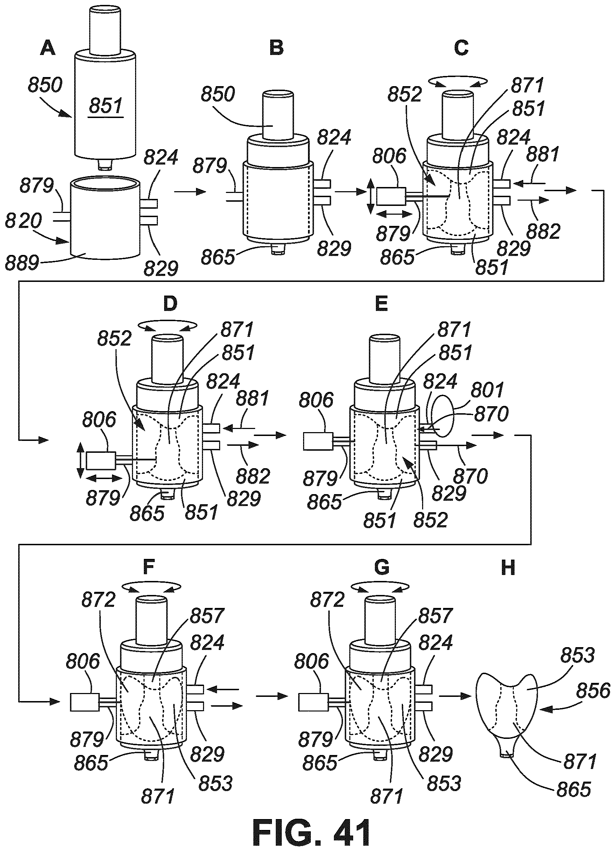

Fig. 41 is a schematic of a method of preparing a dental restoration 856 using an injection and sealing apparatus 820. Fig. 41 includes Figs. 41A to 41H.

Fig. 41A shows the blank 850 and the injection and sealing apparatus 820. The blank 850 is prepared from the first material 851. The blank 850 lacks an orientation specific profile prepared from the first material 851 for securing the blank 850 in a defined orientation in relation to a milling machine. The blank 850 includes the attachment point 865 that may be connected with a restoration or implanted into an individual's dental arch, and which may provide positional certainty when anchored into a holder during milling. The injection and sealing apparatus 820 includes an injection body 889. The injection body 889 includes a repositionable milling input 879. The repositionable milling input 879 may be translated axially relative to the injection body 889 (e.g. as shown in Figs. 41C, 41D, 41F, 41G, etc.). The repositionable milling input may be located in a sleeve that translates axially along the injection body 889. By allowing axial translation of the mill 805, then in combination with rotation of the blank 850 or the composite blank 854, the repositionable milling input 879 facilitates milling of the blank 850 or the composite blank 854 while the injection body 889 is sealed against the blank 850 or the composite blank 854, and as a result, a new seal need not be formed between subsequent rounds of milling and injection.

Fig. 41B shows the injection and sealing apparatus 820 engaged with the blank 850. The injection body 889 enshrouds and seals against the outer surface of the mould 852 for injection. The position of the blank 850 with respect to the injection and sealing apparatus 820 is maintained by the seal between the injection body 889 and the blank 850, providing positional certainty between the injection and sealing apparatus 820 and the blank 850. The attachment point 865 may also provide positional certainty relative to a subtractive manufacturing system.

Fig. 41C shows the mill 806 being applied to mill the blank 850 into the mould 852 while the blank 850 is engaged in and secured to the injection and sealing apparatus 820, providing positional certainty. During milling, lubricant fluid 881 may be added to the injection and sealing apparatus 820, in this case through the injection flow path 824, and may alternatively be provided through a separate flow path. During milling, exhaust fluid 883 may flow out of the vent 829, and may alternatively be exhausted through a separate flow path. Other fluids, such as air, nitrogen, water, machining fluids, bonding or etching compounds, dental resins and dental composite materials may also be injected through the injection flow path 824 or recovered from the vent 829. Injection of bonding compounds may strengthen a bond between subsequent layers of material added to the dental restoration 856. the connection between multiple layers of material The mould 852 defines a profile around which the flowable injection material 870 may be injected and may set around the anchor point 871. During milling, the mould 852 may be rotated relative to the injection body 889 to mill different sides of the mould 852. The mould 852 may also be rotated relative to the injection body 889 inside a sleeve received within the injection body 889, with positional certainty being defined between the sleeve and the injection body 889.

Fig. 41D shows the mill 806 translated downward relative to the injection body 889 with the repositionable milling input 879 for milling a lower portion of the mould 852. Positional certainty is maintained based on the defined orientation maintained between the injection body 889 and the mill 805, and positional certainty is maintained between the injection body 889 and the mould 852.

Fig. 41E shows the injection apparatus 801 injecting the flowable injection material 870 into the injection body 889 through the injection flow path 824. The injection body 889 includes the vent 829. During injection of the flowable injection material 870, excess flowable injection material 870 and other fluids present in the injection and sealing apparatus out of the vent 829 through application of force into the injection flow path 824, under vacuum or through any suitable method of drawing excess flowable injection material 870 and other fluids out of the vent 829.

Fig. 41F shows the compound stock 854 being milled by the mill 806. The compound stock 854 is prepared when the flowable injection material 870 sets into the set material 872. The mill 806 mills the set material 872 down to the dentition 853, providing the restoration 856. The dentition 853 is prepared from the set material 872. The dentition 853 is anchored to the attachment point 865 by the anchor point 871 that was machined into the mould 852. The anchor point 871 may be a custom abutment machined into the blank 850 when preparing the mould 852. The restoration 856 is connected to the unmilled portions of the mould 852 through the flash 857. The flash 857 may be cut, broken or otherwise disrupted to remove the restoration 856 from any remaining first material 851.

Fig. 41G shows the mill 806 translated downward relative to the injection body 889 with the repositionable milling input 879 for milling a lower portion of the mould 852. Positional certainty is maintained based on the defined orientation maintained between the injection body 889 and the mill 805, and positional certainty is maintained between the injection body 889 and the mould 852. Maintaining a connection between the mould 852 and the sealing and injection apparatus 820, through injection and setting of flowable injection material 870, and also through milling, allows positional certainty to be maintained during both injection and milling while maintain sealing between the injection apparatus 820 and the blank 850 or the mould 852. The injection apparatus 801 and the mill 806 may each be connected with the injection apparatus 820 throughout the method, or may be disconnected when not required for a given step.

Fig. 41H shows the restoration 856. The restoration 856 includes the dentition 853, which is prepared from the set material 872. The dentition 853 is connected with the anchor point 871, which is prepared from the first material 851. The attachment point 865 allows the restoration 856 to be connected with a broader restoration, such as a denture or bridge. The restoration 856 may also be used as a crown. In some cases, the blank 850, and as a result the anchor point 871 and the attachment point 865, may be prepared from a metal such as titanium and the set material 872 may be a lithium disilicate or other material suitable for preparing the dentition 853. The attachment point 865 may also be assymetrically designed to provide positional certainty of the restoration with respect to a holder.

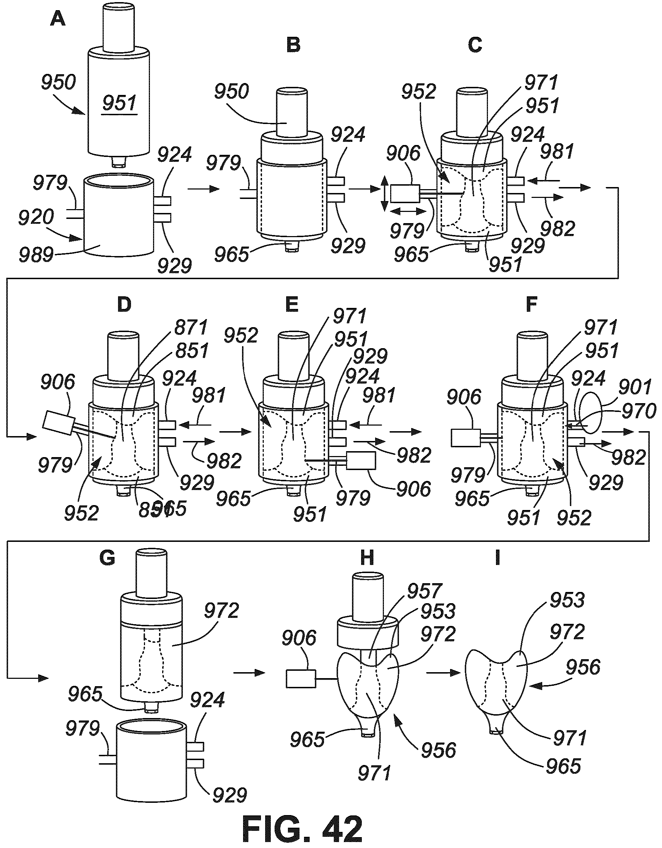

Fig. 42 is a schematic of a method of preparing a dental restoration 956 using an injection and sealing apparatus 920. Fig. 42 includes Figs. 41A to 41I.

Fig. 42A shows the blank 950 and the injection and sealing apparatus 920. The blank 950 is prepared from the first material 951. The blank 950 lacks an orientation specific profile for securing the blank 950 in a defined orientation within a milling machine. The blank 950 includes the attachment point 965 that may be connected with a restoration or implanted into an individual's dental arch. The attachment point 965 also provides positional certainty if the blank 950 is anchored with a holder or milling machine. The injection and sealing apparatus 920 includes the injection body 989. The injection body 989 includes a repositionable milling input 979. The repositionable milling input 979 may be translated axially along the injection body 989 and radially around the injection body 989 (e.g. as shown in Figs. 42C, 42D, 42E, etc.). The repositionable milling input 979 may be located in a sleeve that translates axially along the injection body 989 and radially around the injection body 989. By allowing axial and radial translation of the mill 905, the repositionable milling input 979 facilitates milling of the blank 950 or the composite blank 954 while the injection body 989 is sealed against the blank 950 or the composite blank 954, and as a result, a new seal need not be formed between subsequent rounds of milling and injection.

Fig. 42B shows the injection and sealing apparatus 920 engaged with the blank 950. The injection body 989 enshrouds and seals against the outer surface of the mould 952 for injection. The position of the blank 950 with respect to the injection and sealing apparatus 920 is maintained by the seal between the injection body 989 and the blank 950, providing positional certainty.

Fig. 42C shows the mill 906 mills the blank 950 into the mould 952 while the blank 950 is engaged in and secured to the injection and sealing apparatus 920, providing positional certainty. During milling, lubricant fluid 981 may be added to the injection and sealing apparatus 920, in this case through the injection flow path 924, and may alternatively be provided through a separate flow path. During milling, exhaust fluid 983 may flow out of the vent 929, and may alternatively be exhausted through a separate flow path. The mould 952 defines a profile around which the flowable injection material 970 may be injected and may set around the anchor point 971. During milling, the mill 906 may be rotated relative to the mould 952 by translating the repositionable milling input 979 relative to the injection body 989 both axially and radially, as is shown in Fig. 42E.

Fig. 42D shows the mill 906 angled downward relative to the injection body 989 with the repositionable milling input 979 for milling a lower portion of the mould 952. Positional certainty is maintained based on the defined orientation maintained between the injection body 989 and the mill 905, and positional certainty is maintained between the injection body 989 and the mould 952.

Fig. 42E shows the mill 906 translated downward and rotated about the mould 952 relative to the injection body 989 with the repositionable milling input 979 for milling a lower portion of the mould 952. Positional certainty is maintained based on the defined orientation maintained between the injection and sealing apparatus 920 and the mill 906.

Maintaining a connection between the mould 952 and the sealing and injection apparatus 920, through injection and setting of flowable injection material 970, and also through milling, allows positional certainty to be maintained during both injection and milling while maintain sealing between the injection apparatus 920 and the blank 950 or the mould 952. The injection apparatus 901 and the mill 906 may each be connected with the injection apparatus 920 throughout the method, or may be disconnected when not required for a given step.

Fig. 42F shows the injection apparatus 901 injecting the flowable injection material 970 into the injection body 989 through the injection flow path 924. The injection body 989 includes the vent 929. During injection of the flowable injection material 970, excess flowable injection material 970 and other fluids present in the injection and sealing apparatus out of the vent 929 through application of force into the injection flow path 924, under vacuum or through any suitable method of drawing excess flowable injection material 970 and other fluids out of the vent 929.

Fig. 42G shows the compound stock 954 removed from the injection and sealing apparatus 920. The compound stock 954 is prepared when the flowable injection material 970 sets into the set material 972.

Fig. 42H shows the mill 906 milling the set material 972 down to the dentition 953, providing the restoration 956. The dentition 953 is prepared from the set material 972. The dentition 953 is anchored to the attachment point 965 by the anchor point 971 that was machined into the mould 952. The attachment point 965 provides positional certainty by anchoring to a milling machine or to a holder that is connected with the mill 906. The anchor point 971 may be a custom abutment machined into the blank 950 when preparing the mould 952. The restoration 956 is connected to the unmilled portions of the mould 952 through the flash 957. The flash 957 may be cut, broken or otherwise disrupted to remove the restoration 956 from any remaining first material 951.

Fig. 42I shows the restoration 956, which includes the dentition 953, which is prepared from the set material 972 and connected with the anchor point 971, which is prepared from the first material 951. The attachment point 965 allows the restoration 956 to be connected with a broader restoration, such as a denture or bridge. The restoration 956 may also be used as a crown. In some cases, the blank 950, and as a result the anchor point 971 and the attachment point 965, may be prepared from a metal such as titanium and the set material 972 may be a lithium disilicate or other material suitable for preparing the dentition 953.

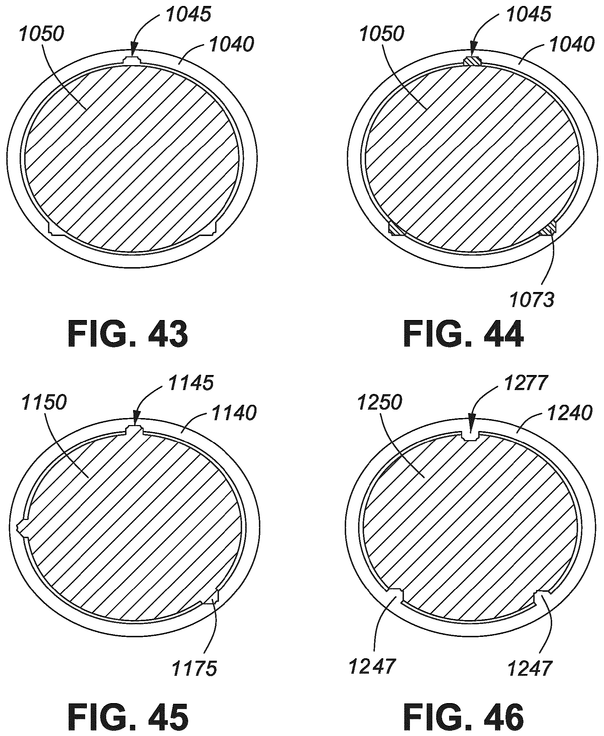

Fig. 43 shows a cross-sectional plan view of a blank 1050 in a holder 1040. The holder 1040 includes grooves 1045 outwardly extending into the walls of the holder 1040.

Fig. 44 shows the blank 1050 after material has been provided to the grooves 1045 and cured to bond with the blank 1050, resulting in ridges 1073. Once the material has cured and bonded with the blank 1050, the resulting ridges 1073 pair with the grooves 1045 and prevent the blank 1050 from rotating relative to the holder 1040, providing positional certainty of the blank 1050 with respect to the holder 1040. The material may be flowable injection material that cures or otherwise hardens into the ridges 1073.

Fig. 45 shows a cross-sectional plan view of a blank 1150 in a holder 1140. The holder 1140 includes the grooves 1145 outwardly extending into the walls of the holder 1140. The blank 1150 includes ridges 1175 that pair with the grooves 1145, preventing the blank 1150 from rotating relative to the holder 1140, providing positional certainty of the blank 1150 with respect to the holder 1140.

Fig. 46 shows a cross-sectional plan view of a blank 1250 in a holder 1240. The holder 1240 includes ridges 1247 inwardly extending into the walls of the holder 1240. The blank 1250 includes grooves 1277 that pair with the ridges 1247, preventing the blank 1250 from rotating relative to the holder 1240, providing positional certainty of the blank 1250 with respect to the holder 1240.

### Examples Only

In the preceding description, for purposes of explanation, numerous details are set forth in order to provide a thorough understanding of the embodiments. However, it will be apparent to one skilled in the art that these specific details are not required. In other instances, well-known electrical structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure may be represented as a computer program product stored in a machine-readable medium (also referred to as a computer-readable medium, a processor-readable medium, or a computer usable medium having a computer-readable program code embodied therein). The machine-readable medium may be any suitable tangible, non-transitory medium, including magnetic, optical, or electrical storage medium including a diskette, compact disk read only memory (CD-ROM), memory device (volatile or non-volatile), or similar storage mechanism. The machine-readable medium may contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations may also be stored on the machine-readable medium. The instructions stored on the machine-readable medium may be executed by a processor or other suitable processing device, and may interface with circuitry to perform the described tasks.

The above-described embodiments are intended to be examples only. Alterations, modifications and variations may be effected to the particular embodiments by those of skill in the art. The scope of the claims should not be limited by the particular embodiments set forth herein, but should be construed in a manner consistent with the specification as a whole.

## Claims

1. A method of manufacturing a dental restoration comprising:
securing an initial mould (52,152);
injecting initial flowable material into the initial mould;
setting the initial flowable material, resulting in an initial compound stock (54,154); and
applying subtractive manufacturing to the initial compound stock for providing the dental restoration,
**characterized in that**:
the initial mould (52,152) is secured in an orientation;
the method further comprises sealing the initial mould (52,152) against an injection surface;
the initial flowable material is injected into the initial mould (52,152) through the injection surface;
setting the initial flowable material results in the initial compound stock which is secured in the orientation; and
the substractive manufacturing is applied to the initial compound stock (54,154) while the initial compound stock (54,154) is secured in the orientation.

2. The method of claim 1 wherein the initial mould comprises a frame within the initial mould for reinforcing the dental restoration.

3. The method of any one of claims 1 or 2 wherein the initial mould comprises an orientation specific mould.

4. The method of any one of claims 1 to 3 wherein securing the initial mould in the orientation comprises securing the initial mould to a holder (40,140), the holder adapted for connecting to both an injection apparatus and to a subtractive manufacturing machine,
optionally wherein securing the initial mould in the orientation comprises matching a profile on the initial mould with a profile on the holder.

5. The method of any one of claims 1 to 4 further comprising producing the initial mould in the orientation from a blank (150) by securing the blank (150) in the orientation and applying subtractive manufacturing to the blank (150), resulting in the initial mould (152),
optionally wherein securing the blank in the orientation comprises securing the blank in a holder, optionally wherein securing the blank in the orientation comprises connecting the holder to a subtractive manufacturing machine for maintaining the initial mould in the orientation, optionally wherein injecting the initial flowable material into the initial mould comprises disconnecting the holder from the subtractive manufacturing machine and connecting the holder to an injection apparatus,
optionally wherein securing the blank in the orientation comprises securing the blank in a subtractive manufacturing machine, optionally wherein injecting the initial flowable material into the initial mould comprises connecting an injection apparatus to the initial mould while the initial mould is secured in the subtractive manufacturing machine.

6. The method of any one of claims 1 or 2 wherein securing the initial mould in the orientation comprises securing the initial mould in a holder,
optionally wherein securing the initial mould in the orientation comprises connecting the holder to a subtractive manufacturing machine for maintaining the initial mould in the orientation, optionally wherein injecting the initial flowable material into the initial mould comprises disconnecting the holder from the subtractive manufacturing machine and connecting the holder to an injection apparatus,
optionally wherein securing the initial mould in the orientation comprises securing the initial mould to a subtractive manufacturing machine, optionally wherein injecting the initial flowable material into the initial mould comprises connecting an injection apparatus to the initial mould while the initial mould is secured in the subtractive manufacturing machine.

7. The method of any one of claims 1 to 6 wherein sealing the initial mould against the injection surface comprises enshrouding the initial mould.

8. The method of any one of claims 1 to 7 wherein sealing the initial mould against the injection surface comprises connecting bolts through an injection head and into the initial mould.

9. The method of any one of claims 1 to 8 wherein sealing the initial mould against the injection surface comprises applying a bias against the initial mould.

10. The method of any one of claims 1 to 9 wherein injecting the initial flowable material into the initial mould comprises injecting the initial flowable material through a plurality of injection apertures regularly spaced from each other over the injection surface,
optionally wherein the initial mould comprises mould apertures defined in the initial mould, the initial mould apertures corresponding to the injection apertures in position for receiving excess initial flowable material from the initial mould.

11. The method of any one of claims 1 to 10 wherein setting the initial flowable material comprises changing a temperature of the initial flowable material in the initial mould.

12. The method of any one of claims 1 to 11 wherein setting the initial flowable material comprises exposing the initial flowable material to electromagnetic radiation.

13. The method of any one of claims 1 to 12 wherein injecting initial flowable material into the initial mould through the injection surface, setting the initial flowable material, and applying subtractive manufacturing the initial compound stock while the initial compound stock is secured in the orientation, are carried out without breaking a seal between the initial mould and the injection surface.

14. The method of any one of claims 1 to 12 wherein following injecting initial flowable material into the initial mould through the injection surface, and prior to applying subtractive manufacturing the initial compound stock, a seal between the initial mould and the injection surface is broken.

15. The method of any one of claims 1 to 14 wherein applying subtractive manufacturing the initial compound stock while the initial compound stock is secured in the orientation for providing the dental restoration comprises:
applying subtractive manufacturing the initial compound stock while the initial compound stock is secured in the orientation, resulting in an intermediate mould;
injecting intermediate flowable material into the intermediate mould through the injection surface;
setting the intermediate material, resulting in an intermediate compound stock secured in the orientation; and
applying subtractive manufacturing to the intermediate compound stock while the intermediate compound stock is secured in the orientation for providing the dental restoration,
optionally wherein the initial flowable material and the intermediate flowable material comprise distinct chemical formulations,
optionally wherein the initial flowable material and the intermediate flowable material comprise the same chemical formulation,
optionally wherein applying subtractive manufacturing to the initial compound stock while the initial compound stock is secured in the orientation for providing the dental restoration comprises executing at least two or more times the steps of:
applying subtractive manufacturing to the intermediate compound stock, or to a subsequent intermediate compound stock, while the intermediate compound stock or the subsequent intermediate compound stock is secured in the orientation, resulting in a subsequent intermediate mould;
injecting subsequent intermediate flowable material into the subsequent intermediate mould through the injection surface;
setting the subsequent intermediate material, resulting in the subsequent intermediate compound stock secured in the orientation; and
applying subtractive manufacturing to the subsequent intermediate compound stock while the subsequent intermediate compound stock is secured in the orientation,
optionally wherein the intermediate flowable material and the subsequent intermediate flowable material comprise distinct chemical formulations,
optionally wherein the intermediate flowable material and the subsequent intermediate flowable material comprise the same chemical formulation,
optionally wherein a final execution of applying subtractive manufacturing to the subsequent intermediate compound stock while the subsequent intermediate compound stock is secured in the orientation for providing the dental restoration comprises:
applying subtractive manufacturing to the subsequent intermediate compound stock while the subsequent intermediate compound stock is secured in the orientation, resulting in a final mould;
injecting final flowable material into the final mould through the injection surface;
setting the final material, resulting in a final compound stock secured in the orientation; and
applying subtractive manufacturing to the final compound stock while the final compound stock is secured in the orientation, resulting in the dental restoration,
optionally wherein the subsequent intermediate flowable material and the final flowable material comprise the same chemical formulation,
optionally wherein the subsequent intermediate flowable material and the final flowable material comprise distinct chemical formulations,
optionally wherein applying subtractive manufacturing to the intermediate compound stock while the intermediate compound stock is secured in the orientation for providing the dental restoration comprises:
applying subtractive manufacturing to the intermediate compound stock while the intermediate compound stock is secured in the orientation, resulting in a final mould;
injecting final flowable material into the final mould through the injection surface;
setting the final material, resulting in a final compound stock secured in the orientation; and
applying subtractive manufacturing to the final compound stock while the final compound stock is secured in the orientation, resulting in the dental restoration,
optionally wherein the intermediate flowable material and the final flowable material comprise the same chemical formulation,
optionally wherein the intermediate flowable material and the final flowable material comprise distinct chemical formulations,
optionally wherein the subtractive manufacturing technique comprises a subtractive manufacturing technique selected from the group consisting of milling, laser ablation, fluid jet cutting and abrasive flow machining.

## Patentansprüche

1. Verfahren zur Fertigung von Zahnersatz, umfassend:
Befestigen eines anfänglichen Formwerkzeugs (52, 152); Injizieren von anfänglichem fließfähigem Material in das anfängliche Formwerkzeug;
Härten des anfänglichen fließfähigen Materials, was zu einer anfänglichen Verbindungsmasse (54, 154) führt; und Anwenden von subtraktiver Fertigung auf die anfängliche Verbindungsmasse, um den Zahnersatz bereitzustellen, **dadurch gekennzeichnet, dass**:
das anfängliche Formwerkzeug (52, 152) in einer Orientierung befestigt ist;
das Verfahren des Weiteren Versiegeln des anfänglichen Formwerkzeugs (52, 152) zu einer Injektionsfläche umfasst;
wobei das anfängliche fließfähige Material durch die Injektionsfläche hindurch in das anfängliche Formwerkzeug (52, 152) injiziert wird;
Härten des anfänglichen fließfähigen Materials zu der anfänglichen Verbindungsmasse führt, die in der Orientierung befestigt ist; und
wobei die subtraktive Fertigung auf die anfänglichen Verbindungsmasse (54, 154) angewendet wird, während die anfängliche Verbindungsmasse (54, 154) in der Orientierung befestigt ist.

2. Verfahren nach Anspruch 1, wobei das anfängliche Formwerkzeug einen Rahmen innerhalb des anfänglichen Formwerkzeugs zum Verstärken des Zahnersatzes umfasst.

3. Verfahren nach einem der Ansprüche 1 oder 2, wobei das anfängliche Formwerkzeug ein orientierungsspezifisches Formwerkzeug umfasst.

4. Verfahren nach einem der Ansprüche 1 bis 3, wobei Befestigen des anfänglichen Formwerkzeugs in der Orientierung Befestigen des anfänglichen Formwerkzeugs an einem Halter (40, 140) umfasst, wobei der Halter vorgesehen ist, um sowohl mit einem Injektionsgerät als auch mit einer subtraktiven Fertigungsmaschine verbunden zu werden,
wobei gegebenenfalls Befestigen des anfänglichen Formwerkzeugs in der Orientierung Abgleichen eines Profils an dem anfänglichen Formwerkzeug mit einem Profil an dem Halter umfasst.

5. Verfahren nach einem der Ansprüche 1 bis 4, des Weiteren umfassend Produzieren des anfänglichen Formwerkzeugs in der Orientierung aus einem Rohling (150) durch Befestigen des Rohlings (150) in der Orientierung und Anwenden von subtraktiver Fertigung auf den Rohling (150), was zu dem anfänglichen Formwerkzeug (152) führt, wobei gegebenenfalls Befestigen des Rohlings in der Orientierung Befestigen des Rohlings in einem Halter umfasst, wobei Befestigen des Rohlings in der Orientierung gegebenenfalls Verbinden des Halters mit einer subtraktiven Fertigungsmaschine umfasst, um das anfängliche Formwerkzeug in der Orientierung beizubehalten, wobei gegebenenfalls Injizieren des anfänglichen fließfähigen Materials in das anfängliche Formwerkzeug Trennen des Halters von der subtraktiven Fertigungsmaschine und Verbinden des Halters mit einem Injektionsgerät umfasst, wobei Befestigen des Rohlings in der Orientierung gegebenenfalls Befestigen des Rohlings in einer subtraktiven Fertigungsmaschine umfasst, wobei gegebenenfalls Injizieren des anfänglichen fließfähigen Materials in das anfängliche Formwerkzeug Verbinden eines Injektionsgeräts mit dem anfänglichen Formwerkzeug umfasst, während das anfängliche Formwerkzeug in der subtraktiven Fertigungsmaschine befestigt ist.

6. Verfahren nach einem der Ansprüche 1 oder 2, wobei Befestigen des anfänglichen Formwerkzeugs in der Orientierung Befestigen des anfänglichen Formwerkzeugs in einem Halter umfasst,
wobei gegebenenfalls Befestigen des anfänglichen Formwerkzeugs in der Orientierung Verbinden des Halters mit einer subtraktiven Fertigungsmaschine umfasst, um das anfängliche Formwerkzeug in der Orientierung beizubehalten, wobei gegebenenfalls Injizieren des anfänglichen fließfähigen Materials in das anfängliche Formwerkzeug Trennen des Halters von der subtraktiven Fertigungsmaschine und Verbinden des Halters mit einem Injektionsgerät umfasst,
wobei gegebenenfalls Befestigen des anfänglichen Formwerkzeugs in der Orientierung Befestigen des anfänglichen Formwerkzeugs an einer subtraktiven Fertigungsmaschine umfasst, wobei gegebenenfalls Injizieren des anfänglichen fließfähigen Materials in das anfängliche Formwerkzeug Verbinden eines Injektionsgeräts mit dem anfänglichen Formwerkzeug umfasst, während das anfängliche Formwerkzeug in der subtraktiven Fertigungsmaschine befestigt ist.

7. Verfahren nach einem der Ansprüche 1 bis 6, wobei Versiegeln des anfänglichen Formwerkzeugs zu der Injektionsfläche Einhüllen des anfänglichen Formwerkzeugs umfasst.

8. Verfahren nach einem der Ansprüche 1 bis 7, wobei Versiegeln des anfänglichen Formwerkzeugs zu der Injektionsfläche Verbinden von Bolzen durch einen Injektionskopf hindurch und in das anfängliche Formwerkzeug hinein umfasst.

9. Verfahren nach einem der Ansprüche 1 bis 8, wobei Versiegeln des anfänglichen Formwerkzeugs zu der Injektionsfläche Anwenden von Vorspannung gegen das anfängliche Formwerkzeug umfasst.

10. Verfahren nach einem der Ansprüche 1 bis 9, wobei Injizieren des anfänglichen fließfähigen Materials in das anfängliche Formwerkzeug Injizieren des anfänglichen fließfähigen Materials durch eine Vielzahl von Injektionsöffnungen umfasst, die regelmäßig voneinander über die Injektionsfläche beabstandet sind,
wobei das anfängliche Formwerkzeug gegebenenfalls Formwerkzeugöffnungen umfasst, die in dem anfänglichen Formwerkzeug definiert sind, wobei die anfänglichen Formwerkzeugöffnungen in der Position den Injektionsöffnungen entsprechen, um überschüssiges anfängliches fließfähiges Material aus dem anfänglichen Formwerkzeug aufzunehmen.

11. Verfahren nach einem der Ansprüche 1 bis 10, wobei Härten des anfänglichen fließfähigen Materials Ändern einer Temperatur des anfänglichen fließfähigen Materials in dem anfänglichen Formwerkzeug umfasst.

12. Verfahren nach einem der Ansprüche 1 bis 11, wobei Härten des anfänglichen fließfähigen Materials Exponieren des anfänglichen fließfähigen Materials gegenüber elektromagnetischer Strahlung umfasst.

13. Verfahren nach einem der Ansprüche 1 bis 12, wobei Injizieren von anfänglichem fließfähigem Material in das anfängliche Formwerkzeug durch die Injektionsfläche hindurch, Härten des anfänglichen fließfähigen Materials und Anwenden von subtraktiver Fertigung auf die anfängliche Verbindungsmasse, während die anfängliche Verbindungsmasse in der Orientierung befestigt ist, durchgeführt werden, ohne eine Versiegelung zwischen dem anfänglichen Formwerkzeug und der Injektionsfläche zu brechen.

14. Verfahren nach einem der Ansprüche 1 bis 12, wobei nach dem Injizieren von anfänglichem fließfähigem Material in das anfängliche Formwerkzeug durch die Injektionsfläche hindurch und vor dem Anwenden von subtraktiver Fertigung auf die anfängliche Verbindungsmasse eine Versiegelung zwischen dem anfänglichen Formwerkzeug und der Injektionsfläche gebrochen wird.

15. Verfahren nach einem der Ansprüche 1 bis 14, wobei Anwenden von subtraktiver Fertigung auf die anfängliche Verbindungsmasse, während die anfängliche Verbindungsmasse in der Orientierung befestigt ist, um den Zahnersatz bereitzustellen, umfasst:
Anwenden von subtraktiver Fertigung auf die anfängliche Verbindungsmasse, während die anfängliche Verbindungsmasse in der Orientierung befestigt ist, was zu einem intermediären Formwerkzeug führt;
Injizieren von intermediärem fließfähigem Material durch die Injektionsfläche hindurch in das intermediäre Formwerkzeug;
Härten des intermediären Materials, was zu einer intermediären Verbindungsmasse führt, die in der Orientierung befestigt ist; und
Anwenden von subtraktiver Fertigung auf die intermediäre Verbindungsmasse, während die intermediäre Verbindungsmasse in der Orientierung befestigt ist, um den Zahnersatz bereitzustellen,
wobei gegebenenfalls das anfängliche fließfähige Material und das intermediäre fließfähige Material unterschiedliche chemische Formulierungen umfassen,
wobei gegebenenfalls das anfängliche fließfähige Material und das intermediäre fließfähige Material die gleiche chemische Formulierung umfassen,
wobei gegebenenfalls Anwenden von subtraktiver Fertigung auf die anfängliche Verbindungsmasse, während die anfängliche Verbindungsmasse in der Orientierung befestigt ist, um den Zahnersatz bereitzustellen, zweimaliges oder mehrmaliges Ausführen der folgenden Schritte umfasst:
Anwenden von subtraktiver Fertigung auf die intermediäre Verbindungsmasse oder auf eine nachfolgende intermediäre Verbindungsmasse, während die intermediäre Verbindungsmasse oder die nachfolgende intermediäre Verbindungsmasse in der Orientierung befestigt ist, was zu einem nachfolgenden intermediären Formwerkzeug führt;
Injizieren von nachfolgendem intermediärem fließfähigem Material durch die Injektionsfläche hindurch in das nachfolgende intermediäre Formwerkzeug;
Härten des nachfolgenden intermediären Materials, was zu einer nachfolgenden intermediären Verbindungsmasse führt, die in der Orientierung befestigt ist; und
Anwenden von subtraktiver Fertigung auf die nachfolgende intermediäre Verbindungsmasse, während die nachfolgende intermediäre Verbindungsmasse in der Orientierung befestigt ist,
wobei gegebenenfalls das intermediäre fließfähige Material und das nachfolgende intermediäre fließfähige Material unterschiedliche chemische Formulierungen umfassen,
wobei gegebenenfalls das intermediäre fließfähige Material und das nachfolgende intermediäre fließfähige Material die gleiche chemische Formulierung umfassen,
wobei gegebenenfalls eine finale Ausführung des Anwendens von subtraktiver Fertigung auf die nachfolgende intermediäre Verbindungsmasse, während die nachfolgende intermediäre Verbindungsmasse in der Orientierung befestigt ist, um den Zahnersatz bereitzustellen, umfasst:
Anwenden von subtraktiver Fertigung auf die nachfolgende intermediäre Verbindungsmasse, während die nachfolgende intermediäre Verbindungsmasse in der Orientierung befestigt ist, was zu einem finalen Formwerkzeug führt;
Injizieren von finalem fließfähigem Material durch die Injektionsfläche hindurch in das finale Formwerkzeug;
Härten des finalen Materials, was zu einer finalen Verbindungsmasse führt, die in der Orientierung befestigt ist; und
Anwenden von subtraktiver Fertigung auf die finale Verbindungsmasse, während die finale Verbindungsmasse in der Orientierung befestigt ist, was zu dem Zahnersatz führt, wobei gegebenenfalls das nachfolgende intermediäre fließfähige Material und das finale intermediäre fließfähige Material die gleiche chemische Formulierung umfassen,
wobei gegebenenfalls das nachfolgende intermediäre fließfähige Material und das finale fließfähige Material unterschiedliche chemische Formulierungen umfassen,
wobei gegebenenfalls Anwenden von subtraktiver Fertigung auf die intermediäre Verbindungsmasse, während die intermediäre Verbindungsmasse in der Orientierung befestigt ist, um den Zahnersatz bereitzustellen, umfasst:
Anwenden von subtraktiver Fertigung auf die intermediäre Verbindungsmasse, während die intermediäre Verbindungsmasse in der Orientierung befestigt ist, was zu einem finalen Formwerkzeug führt;
Injizieren von finalem fließfähigem Material durch die Injektionsfläche hindurch in das finale Formwerkzeug;
Härten des finalen Materials, was zu einer finalen Verbindungsmasse führt, die in der Orientierung befestigt ist; und
Anwenden von subtraktiver Fertigung auf die finale Verbindungsmasse, während die finale Verbindungsmasse in der Orientierung befestigt ist, was zu dem Zahnersatz führt,
wobei gegebenenfalls das intermediäre fließfähige Material und das finale intermediäre fließfähige Material die gleiche chemische Formulierung umfassen,
wobei gegebenenfalls das intermediäre fließfähige Material und das finale fließfähige Material unterschiedliche chemische Formulierungen umfassen,
wobei gegebenenfalls die subtraktive Fertigungstechnik eine subtraktive Fertigungstechnik ausgewählt aus der Gruppe bestehend aus Fräsen, Laserablation, Fluidstrahlschneiden und Strömungsschleifen umfasst.

## Revendications

1. Procédé de fabrication d'une restauration dentaire comprenant :
la fixation d'un moule initial (52, 152) ;
l'injection d'un matériau fluidifiable initial dans le moule initial ;
le durcissement du matériau fluidifiable initial, ce qui permet d'obtenir un bloc de composé initial (54, 154) ; et
l'application d'une fabrication soustractive au bloc de composite initial pour fournir la restauration dentaire, **caractérisé en ce que** :
le moule initial (52, 152) est fixé dans une orientation ;
le procédé comprend en outre le scellement du moule initial (52, 152) contre une surface d'injection ;
le matériau fluidifiable initial est injecté dans le moule initial (52, 152) à travers la surface d'injection ;
le durcissement du matériau fluidifiable initial permet d'obtenir le bloc de composé initial qui est fixé dans l'orientation ; et
la fabrication soustractive est appliquée au bloc de composé initial (54, 154) pendant que le bloc de composé initial (54, 154) est fixé dans l'orientation.

2. Procédé selon la revendication 1 dans lequel le moule initial comprend un bâti à l'intérieur du moule initial pour renforcer la restauration dentaire.

3. Procédé selon l'une quelconque des revendications 1 ou 2 dans lequel le moule initial comprend un moule à orientation spécifique.

4. Procédé selon l'une quelconque des revendications 1 à 3 dans lequel la fixation du moule initial dans l'orientation comprend la fixation du moule initial à un support (40, 140), le support étant conçu pour être relié à la fois à un appareil d'injection et à une machine de fabrication soustractive,
éventuellement dans lequel la fixation du moule initial dans l'orientation comprend la mise en correspondance d'un contour sur le moule initial et d'un contour sur le support.

5. Procédé selon l'une quelconque des revendications 1 à 4 comprenant en outre la production du moule initial dans l'orientation à partir d'une ébauche (150) en fixant l'ébauche (150) dans l'orientation et en appliquant une fabrication soustractive à l'ébauche (150), ce qui permet d'obtenir le moule initial (152),
éventuellement dans lequel la fixation de l'ébauche dans l'orientation comprend la fixation de l'ébauche dans un support, éventuellement dans lequel la fixation de l'ébauche dans l'orientation comprend la liaison du support à une machine de fabrication soustractive pour maintenir le moule initial dans l'orientation, éventuellement dans lequel l'injection du matériau fluidifiable initial dans le moule initial comprend la désolidarisation du support de la machine de fabrication soustractive et la liaison du support à un appareil d'injection,
éventuellement dans lequel la fixation de l'ébauche dans l'orientation comprend la fixation de l'ébauche dans une machine de fabrication soustractive, éventuellement dans lequel l'injection du matériau fluidifiable initial dans le moule initial comprend la liaison d'un appareil d'injection au moule initial pendant que le moule initial est fixé dans la machine de fabrication soustractive.

6. Procédé selon l'une quelconque des revendications 1 ou 2 dans lequel la fixation du moule initial dans l'orientation comprend la fixation du moule initial dans un support,
éventuellement dans lequel la fixation du moule initial dans l'orientation comprend la liaison du support à une machine de fabrication soustractive pour maintenir le moule initial dans l'orientation, éventuellement dans lequel l'injection du matériau fluidifiable initial dans le moule initial comprend la désolidarisation du support de la machine de fabrication soustractive et la liaison du support à un appareil d'injection,
éventuellement dans lequel la fixation du moule initial dans l'orientation comprend la fixation du moule initial à une machine de fabrication soustractive, éventuellement dans lequel l'injection du matériau fluidifiable initial dans le moule initial comprend la liaison d'un appareil d'injection au moule initial pendant que le moule initial est fixé dans la machine de fabrication soustractive.

7. Procédé selon l'une quelconque des revendications 1 à 6 dans lequel le scellement du moule initial contre la surface d'injection comprend l'enveloppement du moule initial.

8. Procédé selon l'une quelconque des revendications 1 à 7 dans lequel le scellement du moule initial contre la surface d'injection comprend la liaison de boulons à travers une tête d'injection et dans le moule initial.

9. Procédé selon l'une quelconque des revendications 1 à 8 dans lequel le scellement du moule initial contre la surface d'injection comprend l'application d'une sollicitation contre le moule initial.

10. Procédé selon l'une quelconque des revendications 1 à 9 dans lequel l'injection du matériau fluidifiable initial dans le moule initial comprend l'injection du matériau fluidifiable initial à travers une pluralité d'ouvertures d'injection régulièrement espacées les unes des autres sur la surface d'injection,
éventuellement dans lequel le moule initial comprend des ouvertures de moule définies dans le moule initial, les ouvertures de moule initial correspondant aux ouvertures d'injection en position de réception de l'excédent de matériau fluidifiable initial à partir du moule initial.

11. Procédé selon l'une quelconque des revendications 1 à 10 dans lequel le durcissement du matériau fluidifiable initial comprend le changement de température du matériau fluidifiable initial dans le moule initial.

12. Procédé selon l'une quelconque des revendications 1 à 11 dans lequel le durcissement du matériau fluidifiable initial comprend l'exposition du matériau fluidifiable initial à un rayonnement électromagnétique.

13. Procédé selon l'une quelconque des revendications 1 à 12 dans lequel l'injection du matériau fluidifiable initial dans le moule initial à travers la surface d'injection, le durcissement du matériau fluidifiable initial et l'application de la fabrication soustractive au bloc de composé initial pendant que le bloc de composé initial est fixé dans l'orientation, sont effectués sans rompre l'étanchéité entre le moule initial et la surface d'injection.

14. Procédé selon l'une quelconque des revendications 1 à 12 dans lequel, après l'injection de matériau fluidifiable initial dans le moule initial à travers la surface d'injection, et avant l'application d'une fabrication soustractive au bloc de composé initial, une étanchéité entre le moule initial et la surface d'injection est rompue.

15. Procédé selon l'une quelconque des revendications 1 à 14 dans lequel l'application d'une fabrication soustractive au bloc de composé initial pendant que le bloc de composé initial est fixé dans l'orientation pour fournir la restauration dentaire comprend :
l'application d'une fabrication soustractive au bloc de composé initial pendant que le bloc de composé initial est fixé dans l'orientation, ce qui permet d'obtenir un moule intermédiaire ;
l'injection d'un matériau fluidifiable intermédiaire dans le moule intermédiaire à travers la surface d'injection ;
le durcissement du matériau intermédiaire, ce qui permet d'obtenir un bloc de composé intermédiaire fixé dans l'orientation ; et
l'application d'une fabrication soustractive au bloc de composé intermédiaire pendant que le bloc de composé intermédiaire est fixé dans l'orientation pour fournir la restauration dentaire,
éventuellement dans lequel le matériau fluidifiable initial et le matériau fluidifiable intermédiaire comprennent des formulations chimiques distinctes,
éventuellement dans lequel le matériau fluidifiable initial et le matériau fluidifiable intermédiaire comprennent la même formulation chimique,
éventuellement dans lequel l'application d'une fabrication soustractive au bloc de composé initial pendant que le bloc de composé initial est fixé dans l'orientation pour fournir la restauration dentaire comprend l'exécution d'au moins deux fois ou plus des étapes suivantes :
l'application d'une fabrication soustractive au bloc de composé intermédiaire, ou à un bloc de composé intermédiaire ultérieur, pendant que le bloc de composé intermédiaire ou le bloc de composé intermédiaire ultérieur est fixé dans l'orientation, ce qui permet d'obtenir un moule intermédiaire ultérieur ;
l'injection du matériau fluidifiable intermédiaire ultérieur dans le moule intermédiaire ultérieur à travers la surface d'injection ;
le durcissement du matériau intermédiaire ultérieur, ce qui permet d'obtenir le bloc de composé intermédiaire ultérieur fixé dans l'orientation ; et
l'application d'une fabrication soustractive au bloc de composé intermédiaire ultérieur pendant que le bloc de composé intermédiaire ultérieur est fixé dans l'orientation,
éventuellement dans lequel le matériau fluidifiable intermédiaire et le matériau fluidifiable intermédiaire ultérieur comprennent des formulations chimiques distinctes,
éventuellement dans lequel le matériau fluidifiable intermédiaire et le matériau fluidifiable intermédiaire ultérieur comprennent la même formulation chimique,
éventuellement dans lequel une exécution finale de l'application de la fabrication soustractive au bloc de composé intermédiaire ultérieur pendant que le bloc de composé intermédiaire ultérieur est fixé dans l'orientation pour fournir la restauration dentaire comprend :
l'application d'une fabrication soustractive au bloc de composé intermédiaire ultérieur pendant que le bloc de composé intermédiaire ultérieur est fixé dans l'orientation, ce qui permet d'obtenir un moule final ;
l'injection du matériau fluidifiable final dans le moule final à travers la surface d'injection ;
le durcissement du matériau final, ce qui permet d'obtenir un bloc de composé final fixé dans l'orientation ; et
l'application d'une fabrication soustractive au bloc de composé final pendant que le bloc de composé final est fixé dans l'orientation, ce qui permet d'obtenir la restauration dentaire,
éventuellement dans lequel le matériau fluidifiable intermédiaire ultérieur et le matériau fluidifiable final comprennent la même formulation chimique, éventuellement dans lequel le matériau fluidifiable intermédiaire ultérieur et le matériau fluidifiable final comprennent des formulations chimiques distinctes,
éventuellement dans lequel l'application de la fabrication soustractive au bloc de composé intermédiaire pendant que le bloc de composé intermédiaire est fixé dans l'orientation pour fournir la restauration dentaire comprend :
l'application d'une fabrication soustractive au bloc de composé intermédiaire pendant que le bloc de composé intermédiaire est fixé dans l'orientation, ce qui permet d'obtenir un moule final ;
l'injection du matériau fluidifiable final dans le moule final à travers la surface d'injection ;
le durcissement du matériau final, ce qui permet d'obtenir un bloc de composé final fixé dans l'orientation ; et
l'application d'une fabrication soustractive au bloc de composé final pendant que le bloc de composé final est fixé dans l'orientation, ce qui permet d'obtenir la restauration dentaire,
éventuellement dans lequel le matériau fluidifiable intermédiaire et le matériau fluidifiable final comprennent la même formulation chimique,
éventuellement dans lequel le matériau fluidifiable intermédiaire et le matériau fluidifiable final comprennent des formulations chimiques distinctes,
éventuellement dans lequel la technique de fabrication soustractive comprend une technique de fabrication soustractive choisie dans le groupe consistant en fraisage, ablation au laser, découpe au jet de fluide et usinage par flux abrasif.
